(19) **Europäisches Patentamt / European Patent Office / Office européen des brevets**

(11) **EP 3 604 619 A1**

(12) # EUROPEAN PATENT APPLICATION
published in accordance with Art. 153(4) EPC

(43) Date of publication:
**05.02.2020 Bulletin 2020/06**

(21) Application number: **18778292.5**

(22) Date of filing: **30.03.2018**

(51) Int Cl.:
**C25B 11/06** (2006.01)   **C25B 1/10** (2006.01)
**C25B 11/03** (2006.01)   **C25B 13/08** (2006.01)

(86) International application number:
**PCT/JP2018/013768**

(87) International publication number:
**WO 2018/181955 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017 JP 2017072937**

(71) Applicant: **Asahi Kasei Kabushiki Kaisha**
**Tokyo 100-0006 (JP)**

(72) Inventors:
• **HIRANO Toshiyuki**
**Tokyo 100-0006 (JP)**
• **UCHINO Yousuke**
**Tokyo 100-0006 (JP)**
• **TAKAMI Hidefumi**
**Tokyo 100-0006 (JP)**
• **FUJIMOTO Norikazu**
**Tokyo 100-0006 (JP)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **ANODE, BIPOLAR ELECTROLYTIC CELL, AND METHOD FOR PRODUCING HYDROGEN**

(57)   Provided is an anode for alkaline water electrolysis having a low oxygen overvoltage and excellent durability, and a bipolar electrolytic cell comprising the anode. The anode for alkaline water electrolysis comprises a nickel porous substrate; and a nickel catalyst layer formed on a surface of the nickel porous substrate, the nickel catalyst layer comprising cobalt at 0.1 mol% to 10 mol% relative to a total mol number of nickel and cobalt and having a thickness of 50 $\mu$m to 800 $\mu$m, in which the anode has a value of $[I_{NiO}/(I_{Ni}+I_{NiO})]\times100$ of 0 to 15 where $I_{Ni}$ represents a peak intensity of X rays diffracted at a (111) plane of nickel, and $I_{NiO}$ represents a peak intensity of X rays diffracted at a (012) plane of a nickel oxide, in the nickel catalyst layer, and the nickel catalyst layer has a specific surface area of 1.0 $m^2$/g to 10.0 $m^2$/g.

EP 3 604 619 A1

**Description**

TECHNICAL FIELD

This disclosure relates to an anode, a bipolar electrolytic cell using the anode, and a hydrogen production method.

BACKGROUND

In recent years, renewable energy such as wind and solar power has been widely used in order to address issues including global warming due to $CO_2$, and decreasing fossil fuel reserves. The renewable energy, however, highly depends on climatic conditions, and thus has a problem such as unstable supply. Therefore, as a method of storing renewable energy, production of hydrogen utilizing techniques of water electrolysis has attracted attention. By efficiently converting electric energy into hydrogen, storage or transfer of a large amount of energy becomes easy, and thus, renewable energy is expected to become increasingly widely used. In water electrolysis, by supplying current to water, oxygen is generated from an anode and hydrogen is generated from a cathode. Main factors of energy loss in electrolysis include the overvoltage to an anode and a cathode. By decreasing the overvoltage, hydrogen can be efficiently produced. In particular, the overvoltage to an anode is higher than that to a cathode. Thus, research and development have been advanced to decrease the overvoltage of an anode.

In alkaline water electrolysis, requirements necessary for an anode generating oxygen is that the overvoltage for oxygen generation is low, and in an environment in which an anode is exposed to alkaline water including NaOH, KOH, or the like, a substrate of an anode and a catalyst layer are less likely to be corroded and dissolved in an electrolyte. Therefore, as a conductivity substrate for an anode, nickel, nickel alloy, stainless steel, or iron or stainless steel having a surface plated with nickel are typically used. Further, as an anode catalyst (catalyst layer), precious metals such as ruthenium and platinum, porous nickel, and an oxide having nickel as a main component are used. In particular, porous nickel or a nickel oxide or a nickel hydroxide having nickel as a main component are often used because their raw material cost is relatively low.

When the main component of a catalyst layer is nickel, an attempt to decrease an overvoltage by forming a catalyst layer having a large specific surface area is often made. JPS57-82483A (PTL 1) describes a method of obtaining an electrode for water electrolysis having a catalyst layer with a large specific surface area by thermal-splaying powder of a metal oxide on a conductive substrate. Further, WO2013191140A1 (PTL 2) describes an alkaline water electrolyzer using an anode having a porous nickel catalyst layer with a large specific surface area which is suitable for oxygen generation for water electrolysis.

CITATION LIST

Patent Literatures

PTL 1: JPS57-82483A
PTL 2: WO2013191140A1

SUMMARY

(Technical Problem)

However, the electrode described in PTL 1, which is for hydrogen generation, has no composition suitable for an anode for oxygen generation, that is, an anode for water electrolysis. Further, the anode described in PTL 2 is not an electrode which is intended for an unstably supplied energy source such as natural energy, and thus, does not necessarily have enough durability to long-hour electrolysis in which electrolysis can frequently stop and restart.

Therefore, it could thus be helpful to provide an anode having a low oxygen overvoltage and excellent durability, and a bipolar electrolytic cell comprising the anode.

(Solution to Problem)

The inventors made diligent research to solve the problem and repeated experiments. As a result, the inventors found an anode having a low oxygen overvoltage and excellent durability to electrolysis using unstably supplied energy such as natural energy, the anode being obtained by controlling the composition and form of a catalyst layer formed on a surface of a nickel porous substrate, and thus completed this disclosure.

Specifically, the present disclosure provides the following.

[1] An anode comprising: a nickel porous substrate; and a nickel catalyst layer formed on a surface of the nickel porous substrate, the nickel catalyst layer comprising cobalt at 0.1 mol% or more and 10 mol% or less relative to a total mol number of nickel and cobalt and having a thickness of 50 $\mu$m or more and 800 $\mu$m or less, wherein the anode has a value of $[I_{NiO}/(I_{Ni} + I_{NiO})] \times 100$ of 0 or more and 15 or less where $I_{Ni}$ represents a peak intensity of X rays diffracted at a (111) plane of nickel, and $I_{NiO}$ represents a peak intensity of X rays diffracted at a (012) plane of a nickel oxide, in the nickel catalyst layer, and the nickel catalyst layer has a specific surface area of 1.0 m$^2$/g or more and 10.0 m$^2$/g or less.

[2] An anode for alkaline water electrolysis comprising: a nickel porous substrate; and a nickel catalyst layer formed on a surface of the nickel porous substrate, the nickel catalyst layer comprising cobalt at 0.1 mol% or more and 10 mol% or less relative to a total mol number of nickel and cobalt and having a thickness of 50 $\mu$m or more and 800 $\mu$m or less, wherein the anode has a value of $[I_{NiO}/(I_{Ni} + I_{NiO})] \times 100$ of 0 or more and 15 or less where $I_{Ni}$ represents a peak intensity of X rays diffracted at a surface (111) of nickel, and $I_{NiO}$ represents a peak intensity of X rays diffracted at a surface (012) of a nickel oxide, in the nickel catalyst layer, and the nickel catalyst layer has a specific surface area of 1.0 m$^2$/g or more and 10.0 m$^2$/g or less.

[3] The anode according to [1] or [2], wherein the nickel catalyst layer has pores formed therein, the pores in the nickel catalyst layer include first pores having a pore diameter of 2 nm or more and 5 nm or less and second pores having a pore diameter of 0.01 $\mu$m or more and 2.00 $\mu$m or less, the first pores have a specific surface area of 0.6 m$^2$/g or more and 2.0 m$^2$/g or less, and a pore volume of $3 \times 10^{-4}$ ml/g or more and $9 \times 10^{-4}$ ml/g or less, and the second pores have a specific surface area of 2.0 m$^2$/g or more and 5.0 m$^2$/g or less, and a pore volume of 0.04 ml/g or more and 0.2 ml/g or less.

[4] The anode according to any one of [1] to [3] comprising cobalt at 0.5 mol% or more and 2 mol% or less relative to a total mol number of nickel and cobalt in the nickel catalyst layer.

[5] The anode according to any one of [1] to [4] having an electric double layer capacitance of 0.3 F/cm$^2$ or more and 10.0 F/cm$^2$ or less.

[6] The anode according to any one of [1] to [5], wherein the nickel porous substrate has an open fraction of 20 % or more and 80 % or less.

[7] The anode according to any of [1] to [6], wherein the nickel porous substrate has a thickness of 0.2 mm or more and 2.0 mm or less.

[8] The anode according to any one of [1] to [7], wherein the nickel porous substrate is an expanded metal.

[9] The anode according to [8], wherein the expanded metal has a size of SW of 2 mm or more and 5 mm or less and LW of 3 mm or more and 10 mm or less.

[10] A bipolar electrolytic cell comprising the anode according to any one of [1] to [9].

[11] The bipolar electrolytic cell according to [10], comprising the anode and a cathode stacked each other with a membrane interposed therebetween, wherein the membrane is a porous membrane having an average pore diameter of 0.5 $\mu$m or more and 5 $\mu$m or less on a surface of the porous membrane.

[12] The bipolar electrolytic cell according to [11], wherein the membrane is a porous membrane embedded with hydrophilic inorganic particles.

[13] The bipolar electrolytic cell according to [12], wherein the hydrophilic inorganic particles are made of a zirconium oxide.

[14] The bipolar electrolytic cell according to [12], wherein the hydrophilic inorganic particles comprise a compound including a zirconium oxide, and nickel atoms and/or cobalt atoms.

[15] The bipolar electrolytic cell according to any one of [12] to [14], wherein a total of a nickel atom concentration and a cobalt atom concentration is 0.01 atom% or more and 1.0 atom% or less when at least one surface of the membrane is analyzed using a X-ray fluorescence method.

[16] A hydrogen production method for producing hydrogen by electrolyzing water containing alkali with an electrolyzer, wherein the electrolyzer comprises at least an anode and a cathode, the anode comprises a nickel porous substrate and a nickel catalyst layer formed on a surface of the nickel porous substrate, the nickel catalyst layer comprising cobalt at 0.1 mol% or more and 10 mol% or less relative to a total mol number of nickel and cobalt and having a thickness of 50 $\mu$m or more and 800 $\mu$m or less, the anode has a value of $[I_{NiO}/(I_{Ni} + I_{NiO})] \times 100$ of 0 or more and 15 or less where $I_{Ni}$ represents a peak intensity of X rays diffracted at a (111) plane of nickel, and $I_{NiO}$ represents a peak intensity of X rays diffracted at a (012) plane of a nickel oxide, in the nickel catalyst layer, and
the nickel catalyst layer has a specific surface area of 1.0 $m^2$/g or more and 10.0 $m^2$/g or less.

(Advantageous Effect)

According to this disclosure, it is possible to obtain an anode having a low oxygen overvoltage and excellent durability, and a bipolar electrolytic cell comprising the anode.

BRIEF DESCRIPTION OF THE DRAWINGS

In the accompanying drawings:

FIG. 1 is a side view generally illustrating an example of a bipolar electrolyzer including a bipolar electrolytic cell having an anode for alkaline water electrolysis according to one of the embodiments of this disclosure;
FIG. 2 is a cross-sectional view illustrating the inside of an electrolytic cell in a portion enclosed by the broken line in FIG. 1 of a bipolar electrolyzer including a bipolar electrolytic cell having an anode for alkaline water electrolysis according to one of the embodiments of this disclosure; and
FIG. 3 illustrates the outline of an electrolysis device used in examples and comparative examples.

DETAILED DESCRIPTION

The following provides a detailed description of one of the embodiments of this disclosure (hereinafter, referred to as the "present embodiment"). The following present embodiment is a merely representative of this disclosure and does not limit this disclosure. Various modifications can be made within the spirit of this disclosure.

(Anode for alkaline water electrolysis)

An anode for alkaline water electrolysis of the present embodiment comprises a nickel porous substrate and a nickel catalyst layer formed on a surface of the nickel porous substrate, the nickel catalyst layer comprising cobalt at 0.1 mol% or more and 10 mol% or less relative to a total mol number of nickel and cobalt and having a thickness of 50 μm or more and 800 μm or less, wherein the anode has a value of $[I_{NiO}/(I_{Ni} + I_{NiO})] \times 100$ of 0 or more and 15 or less where $I_{Ni}$ represents a peak intensity of X rays diffracted at a (111) plane of nickel, and $I_{NiO}$ represents a peak intensity of X rays diffracted at a (012) plane of a nickel oxide, in the nickel catalyst layer, and the nickel catalyst layer has a specific surface area of 1.0 $m^2$/g or more and 10.0 $m^2$/g or less.
The anode for alkaline water electrolysis of the present embodiment has a low overvoltage because the anode has a nickel catalyst layer with a large specific surface area. When the nickel catalyst is porous, the overvoltage can be further decreased. Further, the nickel catalyst layer contains a proper amount of cobalt, and thus the anode has excellent initial performance and durability. Further, the amount of cobalt is proper, and thus adsorption of cobalt to a membrane can be prevented and the voltage of an electrolytic cell is hardly increased.
In the present embodiment (for example, any of [1] to [16] above), the anode for alkaline water electrolysis has a nickel catalyst layer comprising cobalt at least on a part or all of a surface of a nickel porous substrate of the anode. The nickel catalyst layer may be provided on one or both sides of the nickel porous substrate.
In the present embodiment (for example, any of [1] to [16] above), the nickel porous substrate is a plate-like substrate having many pores, the substrate being made of nickel or a material having nickel as a main component. The material having nickel as a main component includes nickel-based alloy such as monel, inconel, and hastelloy. Examples of a specific shape of the nickel porous substrate include an expanded metal, a punching metal, a plain weave mesh, a metal foam, or shapes similar to them. Among them, an expanded metal is preferable.
In the present embodiment (for example, any of [1] to [16] above), the nickel porous substrate is preferably made of nickel or a material having nickel as a main component. Nickel or a material having nickel as a main component is not dissolved at an oxygen generating potential in an alkaline aqueous solution and can be obtained at low cost as compared with noble metals. Thus, nickel or a material having nickel as a main component is preferable in terms of durability, conductivity, and economy.
In the present embodiment (for example, any of [1] to [16] above), as the nickel porous substrate, an expanded metal made of nickel or a material having nickel as a main component is preferable. Its size is not particularly limited, yet in order to achieve both an increase in the gas generation amount caused by an increase in an electrolytic surface area and efficient removal of gas generated by electrolysis from an electrode surface, and from the viewpoint of mechanical strength, the short way of mesh (SW) is preferably 2 mm or more and 5 mm or less, and more preferably 3 mm or more and 4 mm or less. Further, the long way of mesh (LW) is preferably 3 mm or more and 10 mm or less, and more preferably 4 mm or more and 6 mm or less. The thickness is preferably 0.2 mm or more and 2.0 mm or less, and more preferably 0.8 mm or more and 1.5 mm or less. The open fraction is preferably 20 % or more and 80 % or less, and more preferably 40 % or more and 60 % or less.

The ranges of SW, LW, the thickness, and the open fraction may be individually selected for preferably obtaining the effect of this disclosure.

In the present embodiment (for example, any of [1] to [16] above), the nickel catalyst layer has nickel as a main component but may comprise other elements. Nickel is not dissolved at an oxygen generating potential in an alkaline aqueous solution and can be obtained at low cost as compared with nobel metals. Thus, nickel is preferable in terms of durability, conductivity, and economy. The mol ratio of nickel atoms to a total mol number of nickel atoms and cobalt atoms in the nickel catalyst layer is preferably 75 mol% or more, and more preferably 85 mol% or more. Further, the mol ratio of nickel atoms is preferably 99.9 mol% or less, and more preferably 99.5 mol% or less.

From the viewpoint of conductivity, nickel is preferably in a metal state, but may comprise a nickel oxide, an alloy or a complex oxide with other elements, and other compounds such as a hydroxide, a sulphide, and a phosphide.

As used herein, the "main component" means that the component is contained at 80 wt.% or more (preferably 85 wt.% or more) relative to the total weight of a layer (100 wt.%).

A feature of the present embodiment is that the mol ratio of cobalt atoms relative to a total mol number of nickel atoms and cobalt atoms in the nickel catalyst layer is 0.1 mol% or more and 10 mol% or less. In the present embodiment (for example, any of [1] to [16] above), the mol ratio of cobalt atoms in the nickel catalyst layer is preferably 0.1 mol% or more and 5 mol% or less, and more preferably 0.5 mol% or more and 2 mol% or less.

The mol ratio of nickel atoms or the mol ratio of cobalt atoms relative to a total mol number of nickel atoms and cobalt atoms in the nickel catalyst layer can be measured by the method described in the subsequent EXAMPLES section.

No limitations are placed on the state of cobalt contained in the nickel catalyst layer, and the cobalt may be in any state such as in a state of metal cobalt or cobalt oxide.

In the present embodiment, because cobalt compounds having high electron conductivity are adjacent to nickel compounds in the nickel catalyst layer, active sites of oxygen generation of the nickel compounds are increased, and thus an electrode having a further decreased oxygen generation overvoltage is obtained. Therefore, by adopting the anode of the present embodiment to an electrolytic cell for alkaline water electrolysis, water electrolysis at an even lower voltage becomes possible.

The reason why active sites of oxygen generation of nickel compounds are increased because cobalt compounds having high electron conductivity are adjacent to the nickel compounds is as follows. That is, nickel compounds can smoothly perform an electron transfer from a liquid phase to a solid phase such as electron extraction from hydroxide ions in an alkaline solution, which performance can compare favorably with that of the platinum group or the like. However, nickel compounds have poor electron conductivity in a solid, and thus, cannot smoothly perform an electron transfer between a substrate and a catalyst or between a catalyst and catalyst particles, that is, an electron transfer from a solid to a solid.

On the other hand, cobalt compounds have high electron conductivity, and thus, can perform an electron transfer from a solid to a solid several tens or a hundred of times smoother than nickel. Therefore, when a proper amount of cobalt compounds is added in the nickel catalyst layer, an electron transfer by nickel having poor electron conductivity in a solid can be supplemented by cobalt compounds having high electron conductivity. As a result, nickel compounds can be sufficiently used, and thus, its function as a catalyst can be improved.

However, because a cobalt oxide has slight solubility to an alkaline solution, when a ratio of cobalt oxides is too high, a catalyst layer is dissolved, and in the end, is detached, increasing an oxygen overvoltage. Further, when electrolysis is performed using an unstably supplied energy source such as natural energy, cobalt dissolved in an electrolyte can be deposited in an electrolytic cell due to stop and restart of electrolysis. At this time, deposited cobalt or cobalt compounds may adhere to a passage piping for an electrolyte and generated gas, and other members such as a membrane contained in an electrolytic cell to thereby inhibit the flow of an electrolyte, thus greatly increasing the cell voltage and significantly deteriorating the electrolysis efficiency.

The inventors found that composition of a nickel catalyst layer can be achieved by adjusting the mol ratio of nickel atoms and cobalt atoms when cobalt is contained in the nickel catalyst layer, the composition making it possible to maintain an effect of improving the nickel utilization efficiency by cobalt and to obtain high durability to withstand long-time operation even when the nickel catalyst layer is used in an electrolytic cell. Specifically, the mol ratio of nickel compounds is made large so as not to deteriorate the effect of cobalt. As a result, nickel compounds having high chemical stability to alkali serve as a support which forms a frame of a catalyst layer, and thus, even if cobalt is slightly dissolved, the whole catalyst layer is hardly detached.

A feature of the present embodiment is that the nickel catalyst layer has a thickness of 50 $\mu$m or more and 800 $\mu$m or less. An excessively thick nickel catalyst layer may increase electric resistance and raise an overvoltage, whereas an excessively thin nickel catalyst layer may lead to electrode deterioration and a raised overvoltage due to wear of the nickel catalyst layer caused by detachment of the layer resulting from extended electrolysis or stoppage of electrolysis.

In the present embodiment (for example, any of [1] to [16] above), the thickness of the nickel catalyst layer is preferably 100 $\mu$m or more and 500 $\mu$m or less, and more preferably 100 $\mu$m or more and 300 $\mu$m or less.

The thickness of the nickel catalyst layer can be measured, for example, by observing a cross section of an electrode using an electron microscope. Specifically, a cross section of an electrode is observed using an electron microscope, and an average of values obtained by measuring the thickness of the catalyst layer at five points is defined as the thickness of the catalyst layer.

A feature of the present embodiment is that the value of $[I_{NiO}/(I_{Ni} + I_{NiO})] \times 100$ is 0 or more and 15 or less where $I_{Ni}$ represents a peak intensity of X rays diffracted at a (111) plane of nickel, and $I_{NiO}$ represents a peak intensity of X rays diffracted at a (012) plane of a nickel oxide, in the nickel catalyst layer.

When the ratio of a nickel oxide in the nickel catalyst layer is high, the electric resistance of the catalyst layer is low, decreasing the voltage loss in generating oxygen. At the part of a nickel oxide in the nickel catalyst layer, the conductivity is lowered, but an oxygen generation reaction is hardly caused. Further, nickel oxide is relatively chemically stable. Thus, containing a nickel oxide in the nickel catalyst layer may be effective for maintaining the strength of the nickel catalyst layer. $I_{Ni}$ and $I_{NiO}$ can be determined from measurement results of X-Ray Diffraction (XRD) of the nickel catalyst layer. Specifically, $I_{Ni}$ and $I_{NiO}$ can be measured by the following method of the subsequent EXAMPLES section.

In the present embodiment (for example, any of [1] to [16] above), the value of $[I_{NiO}/(I_{Ni} + I_{NiO})] \times 100$ is more preferably 5 or less, and further preferably 3 or less.

A feature of the present embodiment is that the nickel catalyst layer has a specific surface area of 1.0 m$^2$/g or more and 10.0 m$^2$/g or less. In the present embodiment (for example, any of [1] to [16] above), the nickel catalyst layer preferably has a specific surface area of 2.0 m$^2$/g or more and 5.0 m$^2$/g or less, and more preferably 2.0 m$^2$/g or more and 4.5 m$^2$/g or less.

When the nickel catalyst layer has a specific surface area of less than 1.0 m$^2$/g, reactive active sites per unit area are reduced and a low overvoltage may not be obtained. On the other hand, when the nickel catalyst layer has a specific surface area of more than 10.0 m$^2$/g, the mechanical strength of the catalyst layer is decreased, and durability may be decreased.

In the present embodiment (for example, any of [1] to [16] above), the nickel catalyst layer preferably has pores formed therein.

Among the pores formed in the nickel catalyst layer, first pores having a pore diameter of 2 nm to 5 nm preferably have a specific surface area of 0.6 m$^2$/g to 2.0 m$^2$/g. Further, the first pores preferably have a pore volume of $3 \times 10^{-4}$ ml/g to $9 \times 10^{-4}$ ml/g.

Among the pores formed in the nickel catalyst layer, second pores having a pore diameter in a range of 0.01 $\mu$m to 2.00 $\mu$m preferably have a specific surface area of 2.0 m$^2$/g to 5.0 m$^2$/g. Further, the second pores preferably have a pore volume of 0.04 ml/g to 0.2 ml/g.

Since the second pores having a pore diameter in a range of 0.01 $\mu$m to 2.00 $\mu$m preferably have a small specific surface area but a large pore volume, the first pores are present inside the second pores. The first pores significantly increase the surface area of the nickel catalyst layer. Surfaces of the first pores serve as a reaction field (reaction interface) for an oxidation reaction of hydroxide ions (oxide generating reaction). In the first pores, nickel hydroxide is generated when oxygen is generated, and thus the pores are expected to become small. However, because the first pores are present inside the second pores having a large pore diameter, oxygen generated in the first pores during electrolysis easily escapes to the outside of the catalyst layer through the second pores, and thus electrolysis is hardly hindered. Therefore, in the present embodiment, an oxygen generation overvoltage is presumed not to be raised.

In the present embodiment (for example, any of [1] to [16] above), the first pores more preferably have a specific surface area of 0.6 m$^2$/g to 1.5 m$^2$/g, and further preferably, 0.6 m$^2$/g to 1.0 m$^2$/g. Further, the first pores may have a specific surface area of 0.62 m$^2$/g to 0.98 m$^2$/g. Generally, as the specific surface area of the first pores is increased, the oxygen generation potential is considered to be decreased. However, when the first pores are excessively small, the first pores are completely filled with nickel hydroxides generated during oxygen generation, and thus the substantial surface area of the first pores tends to be decreased. As the specific surface area of the first pores is decreased, the surface area of the whole catalyst layer also tends to be decreased. As the surface area of the whole nickel catalyst layer is decreased, the oxygen generation potential tends to be increased.

In the present embodiment (for example, any of [1] to [16] above), the first pores more preferably have a pore volume of $3.3 \times 10^{-4}$ ml/g to $8.5 \times 10^{-4}$ ml/g, and further preferably $3.6 \times 10^{-4}$ ml/g to $7.9 \times 10^{-4}$ ml/g. As the pore volume of the first pores is increased, the specific surface area tends to be decreased. As the pore volume of the first pores is decreased, the specific surface area tends to be increased.

In the present embodiment (for example, any of [1] to [16] above), the second pores more preferably have a specific surface area of 2.0 m$^2$/g to 4.5 m$^2$/g, and further preferably 2.0 m$^2$/g to 4.0 m$^2$/g. As the specific surface area of the second pores is increased, the volume tends to be decreased. As the specific surface area of the second pores is decreased, the pore volume tends to be increased.

In the present embodiment (for example, any of [1] to [16] above), the second pores more preferably have a pore volume of 0.04 ml/g to 0.15 ml/g, further preferably 0.04 ml/g to 0.1 ml/g, and particularly preferably 0.04 ml/g to 0.09 ml/g. As the pore volume of the second pores is increased, oxygen gas generated in the nickel catalyst layer tends to be easily removed. As the pore volume of the second pores is decreased, gas escape from the nickel catalyst layer is hindered and thus, an oxygen generation overvoltage tends to be increased, but the mechanical strength tends to be increased.

In the present embodiment (for example, any of [1] to [16] above), from the perspective of the overvoltage and durability, the electric double layer capacitance of the anode for alkaline water electrolysis is preferably 0.3 $F/cm^2$ or more and 10.0 $F/cm^2$ or less, and more preferably 0.5 $F/cm^2$ or more and 5.0 $F/cm^2$ or less.

The electric double layer capacitance can be measured by, for example, an electrochemical impedance method. The electric double layer capacitance is calculated by using equivalent circuit fitting to analyze a Cole-Cole plot obtained by plotting real and imaginary components from AC impedance measurement. Specifically, measurement can be performed by a method described in the subsequent EXAMPLES section.

The method to form a nickel catalyst layer on a nickel porous substrate is not limited to a particular method, and examples of such method include plating, plasma spraying, a thermal decomposition method comprising applying heat to a precursor layer solution applied onto a substrate, a method comprising mixing a catalyst substance with a binder component and immobilizing it on a substrate, and a vacuum film-forming method such as a sputtering method.

Among them, plasma spraying is a preferable method. A coating layer (catalyst layer) obtained by plasma spraying is porous and has high strength and high adhesion to a substrate.

As a raw material for the plasma spraying method, metal powder and metal oxide powder are preferably used. When metal oxide powder is used for the raw material, such powder can be prepared by a spray dry method. Metal oxide powder having an average particle size of 0.2 $\mu$m to 5.0 $\mu$m (for example, the particle size may be 1.0 $\mu$m to 5.0 $\mu$m or 0.2 $\mu$m to 2 $\mu$m) is granulized using a spray drying granulator to obtain metal oxide particles having an average particle size of 5 $\mu$m to 100 $\mu$m (for example, the particle size may be 10 $\mu$m to 100 $\mu$m or 5 $\mu$m to 50 $\mu$m). This metal oxide particles are brown in gas such as plasma gas with high temperature to be melted and sprayed onto a substrate such as a nickel porous substrate. That is, a substrate is coated with the melted metal oxide. When the particle size of the metal oxide before granulation is excessively large or small, a pore diameter, a specific surface area, and a pore volume required for forming an electrode cannot be obtained. The metal oxide powder before granulation preferably has an average particle size of 0.2 $\mu$m to 5.0 $\mu$m, and more preferably 0.2 $\mu$m to 2.0 $\mu$m.

In the present embodiment, the metal powder or metal oxide powder used as a raw material for the plasma spraying method includes at least nickel and cobalt. Nickel and cobalt may be a nickel oxide and a cobalt oxide, respectively. Other materials may be added to the raw material. Examples of other materials include powder of at least one metal or metal oxide selected from the group consisting of titanium, chromium, molybdenum, cobalt, manganese, iron, tantalum, zirconium, aluminum, zinc, platinum group, rare earth elements, and the like. Further, at least one additive selected from the group consisting of gum arabic, carboxymethylcellulose and sodium lauryl sulfate may be added to nickel oxide particles before the nickel oxide particles are sprayed to a conductive substrate.

Examples of the plasma spraying method include a method of melting a raw material for thermal spraying with combustion heat of flammable gas such as acetylene and oxygen, a method of processing a raw material used for a thermal spraying method into a bar and melting the material with heat generated by combusting flammable gas to spray it with combustion gas, a method of melting a raw material for thermal spraying with plasma gas obtained by heating gas such as argon, hydrogen, nitrogen, helium, or a mixture thereof. Among them, a plasma spraying method comprising generating plasma from gas of nitrogen or argon mixed with hydrogen and melting a raw material for thermal spraying with the plasma is preferable. The plasma gas speed is as high as more than sound speed and the gas has a temperature of 5000 °C or more. Therefore, a raw material for thermal spraying having a high melting point can be melted, and the melted raw material for thermal spraying can be adhered to a substrate with high speed. As a result, a coating layer such as a nickel catalyst layer which is dense and has high strength can be formed. When the plasma spraying method is used, the speed of coating raw material powder is high. Thus, a coating layer such as a nickel catalyst layer having a thickness of 10 $\mu$m to 1000 $\mu$m can be formed in a relatively short time. In the plasma spraying method, during the process in which powder particles of a melted raw material are deposited on a conductive substrate, dense pores tend to be formed among the particles depending on the conditions of the plasma spraying method, as compared with the case of using other thermal spraying methods. When a metal oxide is sprayed onto a substrate by a thermal spraying method using plasma gas containing hydrogen to obtain a coating, a part of the coating is easily reduced, and thus the conductivity of a coating layer is increased, which makes it possible to produce an electrode having excellent conductivity.

A coating layer such as a nickel catalyst layer formed by the plasma spraying method can be reduced under hydrogen gas stream to thereby form pores on the coating layer such as a nickel catalyst layer.

The temperature at which the coating layer such as a nickel catalyst layer formed by the plasma spraying method is reduced with hydrogen is important. When the reduction temperature is excessively high, pores generated by reduction are broken by heat, and pores, a specific surface area, and a pore volume may not be obtained as expected.

When the reduction temperature is excessively low, reduction of a metal oxide does not proceed. For example, when a nickel oxide is used as a metal oxide, the temperature at which a metal oxide layer is reduced with hydrogen is preferably 180 °C to 300 °C, and particularly preferably 180 °C to 250 °C.

The coating layer such as a nickel catalyst layer may be reduced by electrolysis.

(Electrolyzer for alkaline water electrolysis)

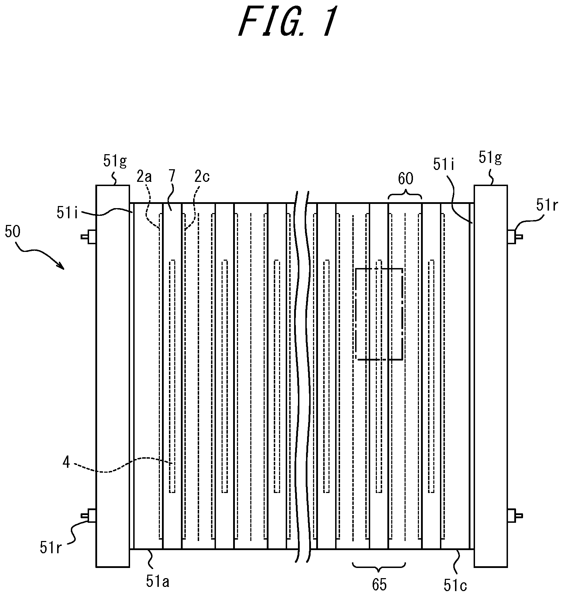

FIG. 1 is a side view generally illustrating an example of a bipolar electrolyzer comprising a bipolar electrolytic cell having an anode for alkaline water electrolysis according to the present embodiment.

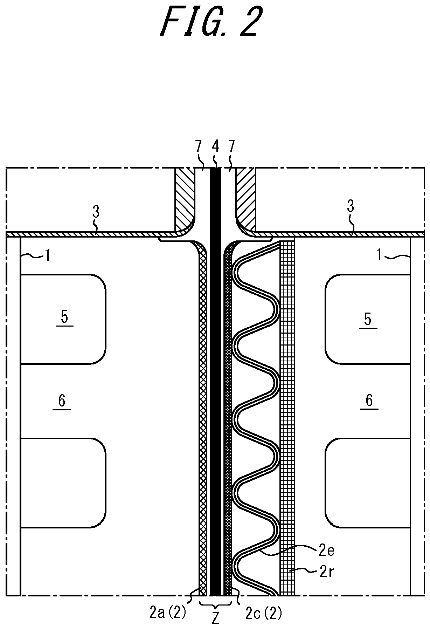

FIG. 2 illustrates a zero-gap structure (a cross-sectional view of a portion enclosed by broken line in FIG. 1) of an example of a bipolar electrolyzer comprising a bipolar electrolytic cell having an anode for alkaline water electrolysis according to the present embodiment.

As illustrated in FIGS. 1 and 2, a bipolar electrolyzer 50 according to the present embodiment preferably comprises a plurality of elements 60 including: an anode 2a; a cathode 2c; a partition wall 1 separating the anode 2a from the cathode 2c; and an outer frame 3 bordering the partition wall 1, the elements 60 being stacked one another with a membrane 4 interposed therebetween.

The bipolar electrolyzer of the present embodiment may be a monopolar type or a bipolar type but is preferably a bipolar electrolyzer for alkaline water electrolysis in which bipolar elements are stacked on top of one another via the corresponding membranes.

The monopolar type, in which each of one or more elements is directly connected to a power source, is implemented through a parallel circuit in which a cathode terminal element is provided at the anode of each of the elements arranged in parallel with a membrane interposed therebetween, an anode terminal element is provided at the cathode of each of the elements with a membrane interposed therebetween, and these terminal elements are connected to a power source.

In the bipolar type, a large number of bipolar elements are connected to a power source and a plurality of bipolar elements each having one surface serving as an anode and the other surface serving as a cathode are arranged in the same orientation and connected in series, and only both ends of the bipolar elements are connected to a power source.

The bipolar electrolyzer has a feature of making the current of a power source small and can be used to produce a large quantity of compounds, specific substances, or the like through electrolysis in a short time. Since power supply equipment having low current and high voltage is cheaper and more compact as compared with power supply equipment having the same power, the bipolar type is more preferable than the monopolar type from an industrial viewpoint.

In the present embodiment, the bipolar electrolyzer 50 is constructed by stacking the required number of bipolar elements 60 as illustrated in FIG. 1.

In the example illustrated in FIG. 1, the bipolar electrolyzer 50 includes, from one end thereof, a fast head 51g, an insulating plate 51i, and an anode terminal element 51a that are arranged in order, and further includes an anode-side gasket portion, a membrane 4, a cathode-side gasket portion, and a bipolar element 60 that are arranged in this order. In this case, the bipolar element 60 is arranged so that the cathode 2c thereof faces toward the anode terminal element 51a. Components from the anode gasket up to the bipolar element 60 are repeatedly arranged as many times as required for the designed production quantity. After components from the anode gasket up to the bipolar element 60 have been arranged repeatedly the required number of times, an anode-side gasket portion, a membrane 4, and a cathode-side gasket portion are arranged again, and finally a cathode terminal element 51c, an insulating plate 51i, and a loose head 51g are arranged in this order. All these components are tightened together with tie rods 51r to provide the bipolar electrolyzer 50.

The arrangement of the bipolar electrolyzer 50 can be arbitrarily selected from either the anode side or the cathode side and is not limited to the order described above.

As illustrated in FIG. 1, in the bipolar electrolyzer 50, the bipolar elements 60 are arranged between the anode terminal element 51a and the cathode terminal element 51c, and the membranes 4 are arranged between the anode terminal element 51a and the bipolar element 60, between the bipolar elements 60 arranged adjacent to each other, and between the bipolar element 60 and the cathode terminal element 51c, respectively.

In the bipolar electrolyzer 50 accordingly to the present embodiment, each membrane 4 is in contact with the anode 2a and the cathode 2c so as to form a zero-gap structure Z as illustrated in FIG. 2.

In particular, in the bipolar electrolyzer 50 according to the present embodiment, a section between the partition walls 1 of two bipolar elements 60 that are adjacent and a section between the partition walls 1 of a bipolar element 60 and a terminal element that are adjacent are each referred to as an electrolytic cell 65. Each electrolytic cell 65 includes: a membrane 4; a partition wall 1, an anode compartment 5a, and an anode 2a of one element; and a cathode 2c, a cathode compartment 5c, and a partition wall 1 of the other element.

The bipolar electrolytic cell of the present embodiment preferably includes the anode for alkaline water electrolysis of the present embodiment.

In a situation in which there is a gap between a membrane 4 and an anode 2a or cathode 2c in alkaline water electrolysis, a large amount of bubbles generated by electrolysis accumulates in this section along with an electrolyte, leading to a significant increase in electric resistance. To greatly reduce an electrolysis voltage in each electrolytic cell 65, it is effective to minimize the separation between the anode 2a and the cathode 2c (hereinafter also referred to as the "inter-electrode distance") to eliminate the influence of an electrolyte and bubbles present between the anode 2a and the cathode 2c.

Therefore, a zero-gap structure is adopted that can maintain a state in which the anode 2a and the membrane 4 are in contact with each other, and so are the cathode 2c and the membrane 4, over the entire surface of the electrodes, or a state in which the inter-electrode distance is substantially the same as the thickness of the membrane 4, over the entire surface of the electrodes, such that there is almost no gap between the anode 2a and the membrane 4 and between the cathode 2c and the membrane 4.

In the bipolar electrolyzer 50, the partition wall 1, the outer frame 3, and the membrane 4 define an electrode compartment 5 through which an electrolyte passes as illustrated in FIG. 2.

A header pipe which is a pipe for distributing or collecting an electrolyte and attached to the bipolar electrolyzer 50 illustrated in FIGS. 1 and 2 is typically disposed as an internal header or an external header. In this disclosure, either type may be adopted without any limitation.

The following provides a detailed description of components of the bipolar electrolytic cell for alkaline water electrolysis and the bipolar electrolyzer according to the present embodiment.

In the following, preferred embodiments for enhancing the effects disclosed herein are also described in detail.

-Partition wall-

Each partition wall 1 is disposed between a cathode 2c and an anode 2a, and is preferably disposed between the anode 2a and a cathode current collector 2r and/or between the cathode 2c and an anode current collector 2r.

In the present embodiment, the shape of the partition wall may be a plate-like shape having a certain thickness, but is not particularly limited.

The size of each partition wall is not particularly limited, and may be appropriately designed according to the electrode compartment size.

From the viewpoint of supplying uniform electric power, each partition wall is preferably made of a material having high conductivity, and from perspectives of alkali resistance and heat resistance, preferred materials include nickel, nickel alloy, mild steel, and nickel alloy plated with nickel.

-Cathode-

The cathode size may be set in accordance with the electrode compartment size without any limitation and may, for example, be 0.4 m to 4.0 m in length, 0.4 m to 6.0 m in width, and 0.1 mm to 3 mm in thickness.

As a cathode in the bipolar electrolytic cell according to the present embodiment, in order to increase the surface area used for electrolysis and to efficiently remove gas generated by electrolysis from an electrode surface, it is more preferable that the cathode is a porous body. In particular, in the case of a zero-gap electrolyzer, it is necessary to remove gas evolved from the back side of a surface of an electrode in contact with the membrane, and thus, it is preferable that the surface of the electrode in contact with the membrane and the opposite surface penetrate each other.

Examples of the porous body include meshes such as a plain weave and a twill weave, a punching metal, an expanded metal, a metal foam, and the like.

The material of the substrate is not particularly limited, yet mild steel, stainless steel, nickel, and nickel-based alloy are preferable because of their resistance to the operating environment.

The catalyst layer of the cathode preferably has high hydrogen producing capability. Nickel, cobalt, iron, a platinum group element or the like may be used for the catalyst layer of the cathode. To achieve the desired activity and durability, the catalyst layer may be formed as a simple substance of a metal, a compound such as an oxide, a complex oxide or alloy of a plurality of metal elements, or a mixture thereof. Specific examples include a porous coating prepared by plasma spraying using Raney nickel, a Raney alloy formed from a combination of a plurality of materials such as nickel and aluminum or nickel and tin, a nickel compound, or a cobalt compound as a material; an alloy or complex compound of nickel and an element selected from cobalt, iron, molybdenum, silver, copper, and the like; a metal or oxide of a platinum group element having high hydrogen producing capability such as platinum or ruthenium; a mixture of such a metal or oxide of a platinum group element with a compound of another platinum group element such as iridium or palladium or a compound of a rare earth metal such as lanthanum or cerium; and a carbon material such as graphene. To achieve high catalytic activity and durability, a plurality of layers of these materials may be deposited or a plurality of these materials may be present in the catalyst layer. Organic substances such as polymers may be contained to improve durability and adhesion to a substrate.

Examples of the method of forming the catalyst layer on a substrate include: a plating method or a plasma spraying method; a thermal decomposition method comprising applying heat to a precursor layer solution applied onto a substrate; a method comprising mixing a catalyst substance with a binder component and immobilizing it on a substrate; and a vacuum film-forming method such as a sputtering method.

When the specific surface area of the cathode (the specific surface area of the whole cathode including its substrate) is small, reactive active sites per unit area are reduced and thus a low overvoltage may not be obtained. On the other hand, when the specific surface area of the cathode is excessively large, the mechanical strength of the catalyst layer decreases and thus the durability may decrease. Therefore, in the present embodiment (for example, any of [1] to [16] above), the specific surface area of the cathode is preferably 0.001 $m^2/g$ or more and 1 $m^2/g$ or less, and more preferably 0.005 $m^2/g$ or more and 0.1 $m^2/g$ or less.

The specific surface area of the cathode can be measured by the BET method, for example. A measurement sample is loaded into a dedicated cell and subjected to pretreatment through thermal vacuum evacuation to remove adsorbates on pore surfaces in advance. Thereafter, an adsorption/desorption isotherm of gas adsorption to the measurement sample is measured at -196 °C. The specific surface area of the measurement sample can be determined through analysis of the obtained adsorption/desorption isotherm by the BET method.

The area used for electrolysis at the surface of an electrode can be obtained in a pseudo manner by measuring the capacitance of an electric double layer formed at the electrode-electrolyte interface.

The double layer capacitance can be measured by an electrochemical impedance method, for example. The double layer capacitance is calculated by using equivalent circuit fitting to analyze a Cole-Cole plot obtained by plotting real and imaginary components from AC impedance measurement.

An excessively high electrode coating resistance leads to a rise in the overvoltage when electrolysis is performed under conditions of high current density to achieve high energy efficiency. Therefore, the coating resistance is preferably 2 $\Omega \cdot cm^2$ or less, and more preferably 0.5 $\Omega \cdot cm^2$ or less.

The coating resistance can be measured by an electrochemical impedance method, for example. The coating resistance is calculated by using equivalent circuit fitting to analyze a Cole-Cole plot obtained by plotting real and imaginary components from AC impedance measurement.

-Outer frame-

The shape of each outer frame 3 in the bipolar electrolytic cell according to the present embodiment is not particularly limited as long as it can border the corresponding partition wall 1, and the outer frame 3 may have a shape including an inner surface extending along an extension of the partition wall 1 in a direction perpendicular to the plane of the partition wall 1.

The shape of the outer frame is not particularly limited and may be appropriately determined according to the shape of the partition wall in a plan view.

The dimensions of the outer frame are not particularly limited and may be designed according to the external dimensions of the electrode compartments.

The material of the outer frame is preferably a material having conductivity. From perspectives of alkali resistance and heat resistance, nickel, nickel alloy, mild steel, and nickel alloy plated with nickel are preferable.

-Membrane-

Any membrane which can separate produced hydrogen gas and oxygen gas from one another while still conducting ions can be used without any limitation as the membrane 4 in each bipolar electrolytic cell 65 according to the present embodiment. An ion permeable membrane such as an ion exchange membrane and a porous membrane may be used as the membrane 4. The inter-electrode distance can be reduced by reducing the membrane thickness and the electrolysis efficiency can be improved by decreasing the resistance caused by an electrolyte. Thus, a porous membrane is particularly preferably used.

The porous membrane has a plurality of fine through-holes and has a structure that permits an electrolyte to pass therethrough. Control of the porous structure such as pore diameter, porosity, and hydrophilicity is very important since an electrolyte permeates into the porous membrane to develop ion conduction. On the other hand, the porous membrane is required to prevent not only an electrolyte but also generated gas from passing therethrough, that is, to have gas barrier properties. From this viewpoint, control of the porous structure is also important.

The porous membrane has a plurality of fine through-holes, and may be, for example, a polymeric porous membrane, an inorganic porous membrane, a woven fabric, or a nonwoven fabric. These may be prepared with known techniques.

Examples of methods by which a polymeric porous membrane may be produced include a phase inversion method (microphase separation method), an extraction method, a stretching method, and a wet gel stretching method. Examples of methods by which an inorganic porous membrane may be produced include a sintering method.

The porous membrane preferably contains a polymeric material and hydrophilic inorganic particles. The presence of hydrophilic inorganic particles can impart hydrophilicity on the porous membrane.

---Polymeric material---

Examples of the polymeric material include polysulfone, polyethersulfone, polyphenylsulfone, polyvinylidene fluoride, polycarbonate, tetrafluoroethylene-perfluoroalkyl vinyl ether copolymer, tetrafluoroethylene-ethylene copolymer, polyvinylidene fluoride, polytetrafluoroethylene, perfluorosulfonic acid, perfluorocarboxylic acid, polyethylene, polypropylene, polyphenylene sulfide, poly(p-phenylenebenzobisoxazole), polyketone, polyimide, and polyetherimide. Of these polymeric materials, polysulfone, polyethersulfone, polyphenylsulfone, polyphenylene sulfide, and polytetrafluoroethylene are preferable, and polysulfone is more preferable. One of these polymeric materials may be used individually, or two or more of these polymeric materials may be used in combination.

By using polysulfone, polyethersulfone, or polyphenylsulfone as the polymeric material, resistance to high temperature and high concentration alkali solution can be further improved.

Moreover, the membrane can be more simply prepared by adopting a method such as non-solvent induced phase separation. Particularly in the case of using polysulfone, the pore diameter can be more accurately controlled.

Polysulfone, polyethersulfone, or polyphenylsulfone may be subjected to crosslinking treatment. The weight-average molecular weight of polysulfone, polyethersulfone, or polyphenylsulfone that has undergone crosslinking treatment, in terms of standard polystyrene-equivalent weight-average molecular weight, is preferably 40,000 or more and 150,000 or less. The method of crosslinking treatment is not particularly limited and may be crosslinking through irradiation with radiation such as an electron beam or $\gamma$-rays, thermal crosslinking using a crosslinking agent, or the like. Note that the standard polystyrene-equivalent weight-average molecular weight can be measured by GPC.

The polymer materials may be commercially available products. Examples of polysulfone include "Ultrason S PSU®" available from BASF and "Udel®" available from Solvay Advanced Polymers ("Ultrason S PSU" and "Udel" are registered trademarks in Japan, other countries, or both). Examples of polyethersulfone include "Ultrason E PES®" available from BASF and "Radel A®" available from Solvay Advanced Polymers ("Ultrason E PES" and "Radel Al" are registered trademarks in Japan, other countries, or both). Examples of polyphenylsulfone include "Ultrason P PPSU®" available from BASF and "Radel R®" available from Solvay Advanced Polymers ("Ultrason P PPSU" and "Radel R" are registered trademarks in Japan, other countries, or both). Examples of polyphenylene sulfide include "TORELINA®" available from Toray Industries, Inc. ("TORELINA" is a registered trademark in Japan, other countries, or both). Examples of polytetrafluoroethylene include "Teflon®" available from DuPont-Mitsui Fluorochemicals Co., Ltd., "Polyflon®" available from Daikin Industries, Ltd., and "Fluon®" available from Asahi Glass Co., Ltd. ("Teflon", "Polyflon" and "Fluon" are registered trademarks in Japan, other countries, or both).

To achieve desired membrane properties such as high separation performance and strength, pore diameters in the porous membrane are preferably controlled. For use in alkaline water electrolysis, pore diameters in the porous membrane are preferably controlled so that the membrane prevents mixing of oxygen gas evolved from the anode and hydrogen gas evolved from the cathode and reduces the voltage loss during electrolysis.

The permeation amount of the porous membrane per unit area becomes large as the average water permeation pore diameter of the porous membrane is increased. In particular, the ion permeability of the porous membrane is improved during electrolysis, and thus the voltage loss tends to be reduced. In addition, an increase in the average water permeation pore diameter of the porous membrane provides a decrease in a surface area in contact with alkali water, which tends to reduce degradation of polymer.

On the other hand, as the average water permeation pore diameter of the porous membrane is decreased, the separation performance of the porous membrane becomes high, which tends to improve the gas impermeability of the porous membrane during electrolysis. Additionally, the porous membrane with a small average water permeation pore diameter can securely hold hydrophilic inorganic particles with a small particle size described later and keep them from being detached. The high holding ability of the hydrophilic inorganic particles can thus be imparted to the porous membrane and its effect can be maintained over a long period of time.

The porous membrane as the membrane of the bipolar electrolytic cell according to the present embodiment preferably has an average water permeation pore diameter in a range of 0.1 $\mu$m to 1.0 $\mu$m, and/or a maximum pore diameter in a range of more than 0.1 $\mu$m to 2.0 $\mu$m. A porous membrane having a pore diameter within those ranges can have both excellent gas impermeability and high ion permeability. The pore diameter of the porous membrane is preferably controlled in a temperature range where the membrane is actually used. Accordingly, the porous membrane to be used as a membrane for electrolysis in the environment of 90 °C, for example, preferably satisfies the ranges of pore diameters at 90 °C. As the ranges for exhibiting even better gas impermeability and high ion permeability as a membrane for alkaline water electrolysis, the porous membrane more preferably has an average water permeation pore diameter of 0.1 $\mu$m or more and 0.5 $\mu$m or less and/or a maximum pore diameter of 0.5 $\mu$m or more and 1.8 $\mu$m or less.

The average water permeation pore diameter and the maximum pore diameter of the porous membrane can be measured by the following procedure.

As used herein, the average water permeation pore diameter of the porous membrane refers to an average water permeation pore diameter measured by the following procedure using an integrity testing system ("Sartocheck® Junior BP-Plus" available from Sartorius Stedim Japan K.K. ("Sartocheck" is a registered trademark in Japan, other countries, or both)). First, the porous membrane, together with its core material, is cut into a given-sized piece as a sample. This sample is set in an arbitrary pressure-resistant vessel, and the vessel is filled with pure water. Next, the pressure-resistant vessel is held in a thermostatic compartment set to a predetermined temperature, and a measurement is initiated after the interior of the pressure-resistant vessel reaches the predetermined temperature (for example, 90 °C). After the measurement is started, the upper face side of the sample is pressurized with nitrogen and then pure water permeates through the sample from its lower face side. At that time, the values of the pressure and the permeation flow rate are recorded. The average water permeation pore diameter can be determined by the following Hagen-Poiseuille equation using the gradient of the pressures versus the water permeation flow rates at pressures between 10 kPa and 30 kPa:

$$\text{Average water permeation pore diameter (m)} = \{32\,\eta L\mu_0 \,/\,(\varepsilon P)\}^{0.5}$$

where $\eta$ is the viscosity (Pa·S) of water, L is the thickness (m) of the porous membrane, and $\mu_0$ is an apparent flow rate calculated by the equation: $\mu_0$ (m/s) = flow rate (m$^3$/s) / flow passage area (m$^2$). In addition, $\varepsilon$ is the porosity and P is the pressure (Pa).

The maximum pore diameter of the porous membrane can be measured by the following procedure using the integrity testing system ("Sartocheck® Junior BP-Plus" available from Sartorius Stedim Japan K.K.). First, the porous membrane, together with its core material, is cut into a given-sized piece as a sample. This sample is wet with pure water to impregnate the pores in the porous membrane with pure water, and then the sample is set in a pressure-resistant vessel for measurements. Next, the pressure-resistant vessel is held in a thermostatic compartment set to a predetermined temperature, and a measurement is initiated after the interior of the pressure-resistant vessel reaches the predetermined temperature. After the measurement is started, the upper face side of the sample is pressurized with nitrogen and then gas bubbles begin to continuously emerge on the lower face side of the sample. The nitrogen pressure at that time is used as a bubble point pressure. The maximum pore diameter can be determined by the following bubble point equation which is a modification of the Young-Laplace equation:

$$\text{Maximum pore diameter (m)} = 4\gamma\cos\theta\,/\,P$$

where $\gamma$ is the surface tension (N/m) of water, $\cos\theta$ is the contact angle (rad) between the porous membrane surface and water, and P is the bubble point pressure (Pa).

In the present embodiment, when, in particular, pores on a surface of the porous membrane are small, cobalt or a cobalt compound dissolved and deposited from an electrode adheres to the porous surface to block the pores, and as a result, the flow of an electrolyte may be inhibited, causing a significant increase in the cell voltage and a significant decrease in the electrolysis efficiency. Therefore, the average pore diameter on a surface of the porous membrane is preferably 0.5 $\mu$m or more and 5 $\mu$m or less, and more preferably 1 $\mu$m or more and 3 $\mu$m or less.

The average pore diameter on a surface of the porous membrane can be determined by, for example, binarizing a SEM image of a surface of the porous membrane using an image analysis software.

Examples of the method of controlling the pore diameter of the porous membrane include a production method of a porous membrane.

The thickness of the porous membrane is not particularly limited, but preferably 60 $\mu$m or more and 700 $\mu$m or less, and more preferably 200 $\mu$m or more and 700 $\mu$m or less. When the porous membrane has a thickness of 250 $\mu$m or more, the porous membrane obtains even better gas impermeability and further enhanced strength against an impact. From this perspective, the lower limit of the thickness of the porous membrane is more preferably 300 $\mu$m or more, further preferably 350 $\mu$m or more, and even further preferably 400 $\mu$m or more. When the thickness of the porous membrane is 700 $\mu$m or less, permeation of ions is less likely to be blocked by the resistance by an electrolyte contained in pores during operation, which helps to maintain even better ion permeability. From this perspective, the upper limit of the thickness of the porous membrane is more preferably 600 $\mu$m or less, further preferably 550 $\mu$m or less, and even further preferably 500 $\mu$m or less. The above effects are further enhanced, especially when the polymer resin contains at least one selected from the group consisting of polysulfone, polyethersulfone, and polyphenylsulfone.

---Hydrophilic inorganic particles---

The porous membrane preferably contains hydrophilic inorganic particles for providing high ion permeability and high gas impermeability. The hydrophilic inorganic particles may be made to attach to a surface of the porous membrane, or a part of the inorganic particles may be embedded in a polymer material constructing the porous membrane. Furthermore, once the hydrophilic inorganic particles are encapsulated (embedded) in voids in the porous membrane, they are less likely to be detached from the porous membrane, which contributes to maintaining the performance of the porous membrane for a long time.

Examples of the hydrophilic inorganic particles include particles of at least one inorganic substance selected from the group consisting of: an oxide or hydroxide of zirconium, nickel, cobalt, bismuth, and cerium; an oxide of Group IV elements of the periodic table; a nitride of Group IV elements of the periodic table; and a carbide of Group IV elements of the periodic table. Among them, an oxide or hydroxide of zirconium, nickel, cobalt, bismuth, and cerium, and an oxide of Group IV elements of the periodic table are more preferred from the viewpoint of the chemical stability, further preferred are an oxide of zirconium, nickel, cobalt, bismuth, and cerium. Among them, a zirconium oxide having especially excellent hydrophilicity is much further preferably used. The surface of the hydrophilic inorganic particles has a polarity. Considering the affinity of the hydrophilic inorganic particles to oxygen or hydrogen molecules with a low polarity and to water molecules with a high polarity in an electrolyte that is an aqueous solution, high-polarity water molecules are expected to be more readily adsorbed on the hydrophilic inorganic particles. Thus, presence of such hydrophilic inorganic particles on a surface of the membrane facilitates preferential absorption of water molecules on a surface of the membrane, whereas hinders absorption of bubbles of molecules such as oxygen molecules and hydrogen molecules on a surface of the membrane. This can effectively prevent gas bubbles from attaching to a surface of the membrane (for example, porous membrane). However, the action and effect of the present embodiment is not so limited.

To prevent the detachment of a zirconium oxide from the membrane (for example, a porous membrane), the membrane may further contain a compound comprising nickel atoms and/or cobalt atoms and having hydrophilicity and especially excellent chemical stability, such as a nickel oxide or a cobalt oxide, in addition to a zirconium oxide.

As to the compound comprising nickel atoms and/or cobalt atoms, nickel atoms or cobalt atoms contained in constituent materials of elements such as an electrode or a current collector may be dissolved in a trace amount by touching an electrolyte to adhere to the membrane such as a surface of a porous membrane as a deposit.

In this instance, an excessively large adhesion amount may cause blocking of pores of the membrane (for example, pores of a porous membrane) to thereby decrease passages for an electrolyte and raise the cell voltage during electrolysis, thus resulting in a decrease of the electrolysis efficiency. Therefore, the total concentration of nickel atoms and cobalt atoms on a surface of the membrane (particularly, porous membrane) is preferably 0.01 atom% to 1.0 atom%. The total concentration is more preferably 0.02 atom% to 1.0 atom%, and further preferably 0.05 atom% to 0.08 atom%. The nickel atom concentration and the cobalt atom concentration on a surface of the membrane or porous membrane can be determined by analyzing a surface of a dried membrane or porous membrane with fluorescence X-rays. The surface concentration of nickel and cobalt may be a surface concentration after electrolysis or a surface concentration after electrolysis under conditions described in the following Example 9 and Comparative Example 5.

The total concentration of nickel atoms and cobalt atoms may satisfy the range described above on at least one surface of the membrane. That is, the total concentration of nickel atoms and cobalt atoms may satisfy the range described above on both surfaces or on one surface of the membrane. In particular, the total concentration preferably satisfies the range described above on a surface on the side of an anode of the membrane.

--Porous support--

When a porous membrane is used as the membrane, the porous membrane may be used with a porous support. The porous membrane preferably encloses a porous support, and more preferably, the porous membranes are laminated on both surfaces of a porous support. Further, the porous membrane may be laminated on both surfaces of a porous support in a symmetric manner.

The membrane is preferably a porous membrane having a thickness of 60 $\mu$m or more and 600 $\mu$m or less. When the porous membrane has a thickness of 60 $\mu$m or more, the membrane is hardly torn. When the porous membrane has a thickness of 600 $\mu$m or less, the overvoltage is not excessively raised and can be made low. The thickness of the membrane is more preferably 100 $\mu$m or more and 500 $\mu$m or less, and further preferably 300 $\mu$m or more and 500 $\mu$m or less.

((Zero-gap structure))

In each zero-gap electrolytic cell 65, it is preferable to adopt a configuration in which a spring as an elastic body 2e is disposed between an electrode 2 and the corresponding partition wall 1 and in which the electrode is supported by the spring as a means of reducing an inter-electrode distance. For instance, in a first example, a spring made of a conductive material may be attached to the partition wall 1, and the electrode 2 may be attached to the spring. In a second example, a spring may be attached to an electrode rib 6 that is attached to the partition wall 1, and the electrode 2 may be attached to the spring. In the case of adopting such a configuration using an elastic body, it is necessary to appropriately adjust the strength of the spring, the number of springs, the shape, and the like, as necessary, so as not to introduce nonuniform pressure of the electrode against the membrane.

Further, by increasing the rigidity of an electrode paired with the electrode supported via the elastic body (for example, by making the anode more rigid than the cathode), a structure having little deformation even when pressed is obtained. Meanwhile, by providing the electrode supported via the elastic body with a flexible structure capable of deforming when pressed against the membrane, irregularities due to tolerance of fabrication accuracy of the electrolyzer, electrode deformation, and the like can be smoothed out, and thus, a zero-gap structure can be maintained.

The zero-gap structure Z described above may, for example, be a zero-gap structure formed between the anode terminal element 51a and an element, between elements, or between an element and the cathode terminal element 51c.

In each bipolar electrolytic cell for alkaline water electrolysis 65 according to the present embodiment, a conductive elastic body 2e and a cathode current collector 2r are preferably provided between the cathode 2c and the partition wall 1 so that the conductive elastic body 2e is interposed between the cathode 2c and the cathode current collector 2r as illustrated in FIG. 2. Further, the cathode current collector 2r is preferably in contact with the cathode rib 6.

As illustrated in FIG. 2, the zero-gap structure Z of each bipolar electrolytic cell for alkaline water electrolysis 65 according to the present embodiment is preferably a structure in which bipolar elements 60, each including: an anode rib 6 and an anode 2a stacked in this order on the anode-2a side of a partition wall 1; and a cathode rib 6, a cathode collector 2r, a conductive elastic body 2e, and a cathode 2c stacked in this order on the cathode-2c side of the partition wall 1, are stacked with a membrane 4 interposed therebetween, and in which the membrane 4 is in contact with the anode 2a and the cathode 2c.

-Current collector-

Examples of current collectors include a cathode current collector and an anode current collector.

The current collector transmits electricity to a conductive elastic body and an electrode stacked thereon, supports the loads exerted by these elements, and has a role of allowing gas generated from the electrode to pass through to the partition wall side without hindrance. Accordingly, the current collector is preferably in the form of an expanded metal, a punched porous plate, or the like. In this case, the open fraction of the current collector is preferably within a range allowing hydrogen gas generated from the electrode to escape to the partition wall side without hindrance. However, if the open fraction is excessively large, problems such as reduced strength of the current collector and lower conductivity to the conductive elastic body may arise, and if the open fraction is excessively small, this may adversely affect gas escape.

Nickel, nickel alloy, stainless steel, mild steel, and the like can be used as a material of the current collector from the viewpoint of conductivity and alkali resistance, yet in terms of corrosion resistance, nickel and mild steel, stainless steel, and nickel alloy plated with nickel are preferred.

-Conductive elastic body-

It is essential that the conductive elastic body is provided between the current collector and the electrode and is in contact with the current collector and the electrode, and that the conductive elastic body allows the electricity to be transmitted to the electrode and does not hinder the diffusion of gas generated from the electrode. This is because if the diffusion of gas is hindered, the electrical resistance increases and the area of the electrode used for electrolysis decreases, resulting in lower electrolysis efficiency. The most important role is to bring the membrane and the electrode into close contact with each other by uniformly applying an appropriate pressure to the electrode so as not to damage the membrane.

-Electrode compartment-

In the bipolar electrolyzer 50 according to the present embodiment, as illustrated in FIG. 2, the partition walls 1, the outer frames 3, and the membrane 4 define electrode compartments 5 through which an electrolyte passes. In this case, across the partition wall 1, one electrode compartment 5 on the anode side is an anode compartment 5a, and the other on the cathode side is a cathode compartment 5c.

-Rib-

In each bipolar electrolytic cell for alkaline water electrolysis 65 according to the present embodiment, it is preferable that each rib 6 is physically connected to the corresponding electrode 2. With this configuration, each rib 6 serves as a support for the corresponding electrode 2, making it easier to maintain the zero-gap structure Z. It is also preferable that each rib 6 is electrically connected to the corresponding partition wall 1.

The above example of the bipolar electrolytic cell for alkaline water electrolysis adopts a structure such that the cathode rib, the cathode current collector, the conductive elastic body, and the cathode are stacked in this order in the cathode compartment, and the anode rib and the anode are stacked in this order in the anode compartment. The present disclosure is not so limited, however, and a structure of "the anode rib, the anode current collector, the conductive elastic body, and the anode" may be used in the anode compartment.

The rib (anode rib and cathode rib) preferably has not only the role of supporting the anode or the cathode, but also the role of transmitting a current from the partition wall to the anode or cathode.

A conductive metal is typically used as a material of the rib. For example, nickel-plated mild steel, stainless steel, or nickel may be used. It is particularly preferable that the material of the rib is the same as that of the partition wall. A most preferred material of the rib is nickel.

-Gasket-

In each bipolar electrolytic cell for alkaline water electrolysis 65 according to the present embodiment, as illustrated in FIG. 2, it is preferable that a gasket 7 is sandwiched together with the membrane 4 between the outer frames 3 bordering the partition walls 1.

The gasket 7 can be used for providing a seal against an electrolyte and generated gas between the bipolar element 60 and the membrane 4 and between the bipolar elements 60 to prevent leakage of an electrolyte and generated gas to the outside of the electrolyzer and gas mixture between the bipolar compartments.

The gasket is generally configured with a quadrangular or annular shape obtained by hollowing out the electrode surface in conformity with surfaces of elements (such as the bipolar element, the anode terminal element, or the cathode terminal element) contacting the frame body. A membrane can be stacked between elements by sandwiching the membrane with two such gaskets. Furthermore, the gasket preferably comprises a slit portion capable of accommodating the membrane so as to hold the membrane, and an opening which allows the accommodated membrane to be exposed on both surfaces of the gasket. In this way, the gasket can accommodate the edge portion of the membrane in the slit portion and cover the end face of the edge portion of the membrane. This configuration can more reliably prevent leakage of the electrolyte or gas from the end face of the membrane.

The material of the gasket is not particularly limited, and a publicly known rubber material, resin material, or the like having insulation properties can be selected.

Specific examples of such rubber and resin materials include: rubber materials such as natural rubber (NR), styrene butadiene rubber (SBR), chloroprene rubber (CR), butadiene rubber (BR), acrylonitrile-butadiene rubber (NBR), silicone rubber (SR), ethylene-propylene rubber (EPT), ethylene-propylene-diene rubber (EPDM), fluoro rubber (FR), isobutylene-isoprene rubber (IIR), urethane rubber (UR), and chlorosulfonated polyethylene rubber (CSM); fluoro resin materials such as polytetrafluoroethylene (PTFE), tetrafluoroethylene/perfluoroalkyl vinyl ether copolymer (PFA), tetrafluoroethylene-ethylene copolymer (ETFE), chlorotrifluoroethylene-ethylene copolymer (ECTFE); and resin materials such as polyphenylene sulfide (PPS), polyethylene, polyimide, and polyacetal. Among them, ethylene-propylene-diene rubber (EPDM) and fluororubber (FR) are particularly preferable from the viewpoint of elastic modulus and alkali resistance.

-Header-

The electrolyzer for alkaline water electrolysis preferably comprises a cathode compartment and an anode compartment for each electrolytic cell. To conduct an electrolysis reaction continuously in the electrolyzer, it is necessary to continuously supply an electrolyte that contains a sufficient amount of materials to be consumed by electrolysis into the cathode compartment and the anode compartment of each electrolytic cell.

The electrolytic cell is connected to an electrolyte supply/discharge plumbing system, called a header, shared by a plurality of electrolytic cells. In general, an anode distribution pipe is called an anode inlet header, a cathode distribution pipe is called a cathode inlet header, an anode collection pipe is called an anode outlet header, and a cathode collection pipe is called a cathode outlet header. Each element is connected to the corresponding electrolyte distribution pipes and the corresponding electrolyte collection pipes through a hose or the like.

The material of the header is not particularly limited, but it is necessary to adopt a material that can sufficiently withstand corrosive properties of an electrolyte that is to be used and operating conditions such as pressure and temperature. The material of the header may be iron, nickel, cobalt, PTFE, ETFE, PFA, polyvinyl chloride, polyethylene, or the like.

-Internal header-

The internal header type is one in which a bipolar electrolyzer and a header (pipe for electrolyte distribution or collection) are integrated.

In an example of the internal header type, an anode inlet header and a cathode inlet header are provided in a part of a region below the outer frame disposed at the edge of the partition wall, and similarly, an anode outlet header and a cathode outlet header are provided in a part of a region above the outer frame disposed at the edge of the partition wall. The outer frame and the anode compartment or the cathode compartment are connected to each other at an electrolyte inlet or an electrolyte outlet through which an electrolyte passes.

-External header-

The external header type is one in which a bipolar electrolyzer and a header (pipe for electrolyte distribution or collection) are separate.

In an external header-type bipolar electrolyzer, an anode inlet header and a cathode inlet header are separately provided so as to run alongside the electrolyzer in a direction perpendicular to the current-carrying surface of the electrolyzer. The anode inlet header and the cathode inlet header are connected to each element by a hose.

The bipolar electrolyzer of inner header type or outer header type may include a gas-liquid separation box for separating electrolyte and gas generated by electrolysis inside the bipolar electrolyzer. The installation position of the gas-liquid separation box is not particularly limited, and the gas-liquid separation box may be installed between the anode compartment and the anode outlet header, or between the cathode compartment and the cathode outlet header.

-Electrolyte-

In the bipolar electrolyzer according to the present embodiment, a cathode compartment frame to which the cathode is attached and an anode compartment frame to which the anode is attached are arranged across the partition wall. That is, the anode compartment and the cathode compartment are partitioned by the partition wall. An electrolyte is supplied to the anode compartment and the cathode compartment.

Electrolytes that are commonly used for water electrolysis may be used as an electrolyte. Examples thereof include a potassium hydroxide aqueous solution and a sodium hydroxide aqueous solution. Further, the concentration of an electrolyte is preferably 1 N or more and 12 N or less, and more preferably 6 N or more and 10 N or less.

((Hydrogen production method))

Next, a method for producing hydrogen by alkaline water electrolysis using the bipolar electrolyzer according to the present embodiment will be described.

In the present embodiment (for example, any of [1] to [16] above), a current is applied to the bipolar electrolyzer which has anodes and cathodes as described above and in which an electrolyte is circulated to perform electrolysis, thus producing hydrogen at the cathodes.

As the method for producing hydrogen in the present embodiment, a hydrogen production method comprising performing water electrolysis of alkali-containing water with an electrolyzer to produce hydrogen is preferable, the electrolyzer having at least an anode and a cathode, the anode comprising a nickel porous substrate and a nickel catalyst layer formed on a surface of the nickel porous substrate, the nickel catalyst layer comprising cobalt at 0.1 mol% or more and 10 mol% or less relative to a total mol number of nickel and cobalt and having a thickness of 50 $\mu$m or more and 800 $\mu$m or less, wherein the anode has a value of $[I_{NiO}/(I_{Ni} + I_{NiO})] \times 100$ of 0 or more and 15 or less where $I_{Ni}$ represents a peak intensity of X rays diffracted at a (111) plane of nickel, and $I_{NiO}$ represents a peak intensity of X rays diffracted at a (012) plane of a nickel oxide, in the nickel catalyst layer, and the nickel catalyst layer has a specific surface area of 1.0 m$^2$/g or more and 10.0 m$^2$/g or less.

A variable power source, for example, can be used as a power source when applying the current. A variable power source is a power source that originates from a renewable energy power station and has an output that fluctuates in increments of several seconds to several minutes, unlike a power source with stable output, such as grid power. The method of renewable energy generation is not particularly limited and may, for example, be solar power generation or wind power generation.

For example, in the case of electrolysis using a bipolar electrolyzer, a cationic electrolyte in an electrolyte moves from an anode compartment of an element, and passes through a membrane to a cathode compartment of an adjacent element, whereas an anionic electrolyte moves from a cathode compartment of an element, and passes through a membrane to an anode compartment of an adjacent element. In this way, a current during electrolysis will flow along the direction in which the elements are connected in series. That is, a current flows from an anode compartment of one element to a cathode compartment of an adjacent element via a membrane. Through electrolysis, oxygen gas is generated in an anode compartment, and hydrogen gas is generated in a cathode compartment.

The bipolar electrolytic cell 65 according to the present embodiment (for example, any of [1] to [16] above) can be used for the bipolar electrolyzer 50, an electrolysis device for alkaline water electrolysis 70, or the like. The electrolysis device for alkaline water electrolysis 70 may, for example, be a device comprising the bipolar electrolyzer 50 according to the present embodiment, a feed pump 71 for circulating an electrolyte, a gas-liquid separation tank 72 for separating an electrolyte from hydrogen and/or from oxygen, and a water replenisher for replenishing water consumed by electrolysis.

The electrolysis device for alkaline water electrolysis may further comprise, for example, a rectifier 74, an oxygen concentration meter 75, a hydrogen concentration meter 76, a flow meter 77, a pressure gauge 78, a heat exchanger 79, and a pressure control valve 80.

In the alkaline water electrolysis method using the electrolysis device for alkaline water electrolysis, the current density applied to the electrolytic cells is preferably 4 kA/m$^2$ to 20 kA/m$^2$, and more preferably 6 kA/m$^2$ to 15 kA/m$^2$.

In particular, when a variable power source is used, the upper limit of the current density is preferably kept in the ranges above.

The anode, the bipolar electrolytic cell and the hydrogen production method according to an embodiment of this disclosure have been described above with reference to the accompanying drawings. However, the anode, the bipolar electrolytic cell and the hydrogen production method according to this disclosure are not limited to the examples above, and the embodiment above may be modified as appropriate.

EXAMPLES

The following describes this disclosure in more detail through examples. However, this disclosure is not limited by the following examples.

(Example 1)

A suspension was prepared by mixing and stirring 99.25 parts by mass of nickel oxide powder having a particle diameter of 0.2 μm to 2 μm, 0.75 parts by mass of cobalt oxide having a particle diameter of 0.2 μm to 2 μm, 2.25 parts by mass of gum arabic, 0.7 parts by mass of carboxymethylcellulose, 0.001 parts by mass of sodium lauryl sulfate, and 100 parts by mass of water. A spray drying granulator was used to prepare a granulated product having a particle diameter of 5 μm to 50 μm from the suspension.

The granulated product was sprayed onto both sides of a nickel porous substrate by plasma spraying to produce an electrode. As the nickel porous substrate, a nickel expanded metal that had been subjected to blasting was prepared. The nickel expanded metal had SW of 3.0 mm, LW of 4.5 mm, a thickness of 1.2 mm, and an open fraction of 54 %. In the plasma spraying, a mixed gas of argon and nitrogen with a ratio of 1:0.8 was used as plasma gas. The electrode was placed in a quartz tube. The quartz tube was inserted into a tubular furnace, the inside of the quartz tube was heated to 200 °C, and a stream of hydrogen was continuously supplied into the quartz tube for 2 hours to reduce a catalyst layer. Through the process above, an anode for water electrolysis comprising the nickel porous substrate and a nickel catalyst layer comprising cobalt formed on a surface of the nickel porous substrate was obtained. The nickel catalyst layer had a thickness of 220 μm.

(Examples 2 to 8 and Comparative Examples 1 and 3)

Using granulated products prepared with the cobalt ratio listed in Table 1, anodes for water electrolysis were prepared in the same way as in Example 1 with the exception that the thickness of the nickel catalyst layer was changed.

(Comparative Example 2)

A granulated product prepared in the same way as in Example 1 was sprayed onto both sides of a nickel porous substrate by plasma spraying. As the nickel porous substrate, a nickel expanded metal having SW of 3.0 mm, LW of 4.5 mm, a thickness of 1.2 mm, and an open fraction of 54 % was prepared, and subjected to blasting to produce an anode for water electrolysis. In the plasma spraying, a mixed gas of argon and nitrogen with a ratio of 1:0.8 was used as plasma gas. Through the process above, an anode for water electrolysis comprising the nickel porous substrate and a nickel catalyst layer comprising cobalt formed on a surface of the nickel porous substrate was obtained. The nickel catalyst layer had a thickness of 220 μm.

Properties of the produced anodes for water electrolysis were analyzed as follows. The results are listed in Table 1.

[(1) Mol ratio of cobalt atoms in a nickel catalyst layer]

The anodes produced in examples and comparative examples were cut and processed into a size of 2 cm in length × 2 cm in width and twisted with pliers to apply a stress, peeling off nickel catalyst layers on surfaces of the anodes. Then, 0.1 g of each catalyst layer was weighed and heated and dissolved in aqua regia. The dissolved catalyst layer was added with pure water and adjusted to a volume of 50 ml, and the existence ratio (parts by mass) of metal elements was measured using an ICP emission spectroscopic apparatus. As the ICP emission spectroscopic apparatus, iCAP6300Duo available from Thermo Fisher Scientific was used. The mol ratio of cobalt atoms to a total mol number of nickel atoms and cobalt atoms ({B / (A + B)} × 100) (in mol%) was measured where (A) was a value of multiplying the part by mass of nickel by a molar mass of nickel of 58.69 and (B) was a value of multiplying the mass part of cobalt by a molar mass of cobalt of 58.93.

[Thickness of a nickel catalyst layer]

Each anode for water electrolysis was cut into a small piece, which was embedded in an epoxy resin. The anode was processed to give a cross-section at an accelerating voltage of 6 kV using a BIB processing apparatus ("E3500" available from Hitachi High-Technologies Corporation). The cross section was observed at a magnification of 250X under an electron microscope ("S-4800" from Hitachi High-Technologies Corporation) to obtain an image of the cross-section. On the obtained cross-sectional image, the average of values of the thickness of the metal oxide layer measured at five points was defined as the thickness of the metal oxide layer.

$$[(3) [I_{NiO} / I_{Ni} + I_{NiO}]] \times 100]$$

A measurement was made using an X-ray diffractometer "RINT-2000" available from Rigaku Corporation at an excitation voltage of 40 kV and an excitation current of 200 mA with an operation axis $2\theta/\theta$ to obtain an X-ray diffraction chart of the anodes for water electrolysis. After a peak from $K\alpha$ ray was eliminated from the X-ray diffraction chart, followed by a baseline correction using X-ray diffraction analysis software "JADE", the peak intensities, $I_{Ni}$ and $I_{NiO}$, were respectively calculated.

[(4) Specific surface area]

A nickel catalyst layer peeled off from the nickel expanded metal substrate was set in a sample pretreatment apparatus VacuPrep available from Shimadzu Corporation. A chamber with the catalyst layer set therein was internally evacuated, and the catalyst layer was retained in a vacuum atmosphere at 80 °C for two hours to obtain a sample used for measurement of the specific surface area. An adsorption and desorption isotherm of the sample was measured by a fixed volume gas adsorption method. Based on the adsorption and desorption isotherm, pore diameters of pores in the sample and the pore specific surface area (unit: $m^2/g$) for each pore diameter were calculated by the BJH (Barrett Joyner Halenda) method. For the measurement of the adsorption and desorption isotherm, an automatic specific surface area/pore distribution analyzer "TriStar II3020" available from Shimadzu Corporation was used. For the gas adsorption, a nitrogen gas was used as adsorption gas, and liquid nitrogen was used as a refrigerant.

The pore specific surface areas for each pore diameter were integrated. Thus, the specific surface area (unit: $m^2/g$) of first pores having a pore diameter in a range of 2 nm to 5 nm among the pores in the catalyst layer was determined. In a similar manner, the specific surface area (unit: $m^2/g$) of second pores having a pore diameter in a range of 0.01 $\mu$m to 2.00 $\mu$m among the pores in the catalyst layer was determined.

[(5) Pore Volume]

Mercury intrusion was used to measure pore diameters of pores in the nickel catalyst layer peeled off from the nickel expanded metal substrate and the pore volume for each pore diameter. For the measurement of the pore volume, an automatic porosimeter "AutoPore 9520" available from Shimadzu Corporation was used. The pore volumes for different pore diameters were integrated. Thus, the pore volume (unit: ml/g) of first pores having a pore diameter in a range of 2 nm to 5 nm among the pores in the catalyst layer was determined. In a similar manner, the pore volume (unit: ml/g) of second pores having a pore diameter in a range of 0.01 $\mu$m to 2.00 $\mu$m among the pores in the catalyst layer was determined.

[(6) Oxygen overvoltage and electric double layer capacitance of an anode]

The oxygen overvoltage of the anode was measured by the following procedure.

A test anode was cut out to a size of 2 cm $\times$ 2 cm and secured to a nickel rod covered with PTFE, by a nickel screw. A platinum mesh was used in the counter electrode, and electrolysis was performed at a current density of 6 kA/m$^2$ in a 32 wt.% sodium hydroxide aqueous solution at 80 °C to measure the oxygen overvoltage (measurement of initial overvoltage). The oxygen overvoltage was measured by a three-electrode method using a Luggin capillary in order to eliminate the influence of the ohmic loss due to the solution resistance. The distance between the tip of the Luggin capillary and the anode was constantly fixed at 1 mm. The device used in measurement of the oxygen overvoltage was a potentiostat/galvanostat "1470E system" available from Solartron Analytical. Silver-silver chloride (Ag/AgCl) was used as a reference electrode in the three-electrode method. The resistance of the electrolyte that could not be removed even by using the three-electrode method was measured by the AC impedance method and the hydrogen overvoltage was corrected based on the measurements of resistance of the electrolyte. The resistance of the electrolyte and the electric double layer capacitance were calculated by using equivalent circuit fitting to analyze a Cole-Cole plot obtained by plotting real and imaginary components using a frequency characteristic analyzer "1255 B" available from Solartron Analytical.

[(7) Overvoltage after 4000 CVs]

Using the three-electrode method, the cyclic voltammetry measurement was carried out with a sweep width of $\pm 0$ V vs. Ag/AgCl to +0.35 V vs. Ag/AgCl. The potential sweep rate was 200 mV/sec. Starting from +0.35 V, passing through $\pm 0$ V, and reaching +0.35 V again was defined as a single cycle (1 CV). The overvoltage after 4000 cycles (the overvoltage after 4000 CVs) was measured.

The evaluation results of the examples and comparative examples are listed in Table 1.

[(8) The adhesion amount of Co to a porous membrane after 24-hour electrolysis]

A test anode having the porous membrane described above tightly attached on its one surface was secured to a nickel rod covered with PTFE by a nickel screw. A platinum mesh was used in the counter electrode, and electrolysis was performed at a current density of 6 kA/m$^2$ in an aqueous 32 wt.% sodium hydroxide solution at 80 °C for 24 hours.

After the electrolysis, the membrane was taken out and washed with distilled water, and subsequently dried until moisture was perfectly removed. The surface of the dried membrane in contact with the test anode was subjected to elementary analysis using a portable component analyzer Niton XL3t available from Thermo Fisher Scientific. The average of values measured at three points per membrane was defined as the surface concentration of Co (atom%).

The evaluation results of the examples and comparative examples are listed in Table 1.

Table 1

| | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|
| (1) Mol ratio of cobalt atoms in a nickel catalyst layer | mol% | 0.75 | 1.0 | 1.0 | 1.5 | 2.0 | 2.0 | 5.0 | 10.0 | 0 | 1.0 | 15.0 |
| (2) Thickness of a nickel catalyst layer | μm | 220 | 110 | 210 | 215 | 100 | 220 | 210 | 200 | 220 | 220 | 215 |
| (3) [INiO/(INi+INiO)]×100 | % | 1.0 | 0.9 | 1.1 | 1.0 | 1.0 | 0.9 | 1.0 | 1.2 | 10.0 | 84.0 | 1.2 |
| (4) Specific surface area of a nickel catalyst layer | m²/g | 2.1 | 2.2 | 2.3 | 2.3 | 2.5 | 2.5 | 2.5 | 2.5 | 1.7 | 0.57 | 2.5 |
| (4) Specific surface area of first pores | m²/g | 0.62 | 0.75 | 0.71 | 0.67 | 0.72 | 0.75 | 0.69 | 0.62 | 0.62 | 0.0001 | 0.62 |
| (4) Specific surface area of second pores | m²/g | 2.1 | 2.2 | 2.3 | 2.3 | 2.5 | 2.5 | 2.5 | 2.5 | 1.6 | 0.57 | 2.5 |
| (5) Pore volume of first pores | ml/g | 0.000628 | 0.0007 | 0.000788 | 0.000566 | 0.000669 | 0.00078 | 0.000546 | 0.00079 | 0.000803 | 0.000073 | 0.000582 |
| (5) Pore volume of second pores | ml/g | 0.05 | 0.05 | 0.07 | 0.05 | 0.06 | 0.05 | 0.06 | 0.05 | 0.04 | 0.04 | 0.05 |
| (6) Electric double layer capacitance | F/cm² | 1.6 | 0.7 | 1.5 | 1.7 | 0.8 | 1.9 | 1.8 | 1.7 | 1.5 | 0.2 | 1.8 |

(continued)

| | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|
| (6) Initial overvoltage | mV | 238 | 237 | 237 | 233 | 238 | 239 | 236 | 234 | 244 | 292 | 239 |
| (7) Overvoltage after 4000 CV | mV | 307 | 289 | 297 | 285 | 273 | 283 | 268 | 259 | 323 | 302 | 280 |
| (8) Ni+ Co adhesion amount to a porous membrane after 24-hours electrolysis | atom% | 0.07 | 0.06 | 0.08 | 0.07 | 0.1 | 0.11 | 0.14 | 0.19 | 0 | 0.02 | 0.25 |

As listed in Table 1, the initial overvoltages of the examples were lower than 240 mV, and thus, good overvoltages were observed. On the other hand, the oxygen overvoltages of Comparative Examples 1 and 2 were 240 mV or more.
Further, the oxygen overvoltages of the examples after the potential cycle test were 310 mV or lower, and good potential cycle resistance were observed.

(Example 9)

An electrolytic cell for alkaline water electrolysis and a bipolar electrolyzer were prepared as follows.

-Anode-

The anode made in Example 3 was used.

-Cathode-

A plain weave mesh substrate obtained by knitting fine nickel wires having a diameter of 0.15 mm with a mesh count of 40 mesh was used as a conductive substrate. The conductive substrate was blasted with alumina powder having a weight-average particle diameter of 100 $\mu$m or less, then subjected to acid treatment in 6 N hydrochloric acid at room temperature for 5 minutes, washed with water, and dried.
Next, a palladium nitrate solution (available from Tanaka Kikinzoku Kogyo K.K.; palladium concentration: 100 g/L) and a dinitrodiammine platinum nitric acid solution (available from Tanaka Kikinzoku Kogyo K.K.; platinum concentration: 100 g/L) were mixed at a molar ratio of palladium to platinum of 1:1 to prepare a first coating liquid.
A tray containing the first coating liquid was placed on the bottom of an EPDM spreader roll, and the spreader roll was impregnated with the coating liquid. The roll was placed at the upper part of the tray such that the roll and the coating liquid remained in contact with each other, and a PVC roller was placed further above the roll to apply the coating liquid on the electrically conductive substrate (roll method). Before the coating liquid was dried, this electrically conductive substrate was passed between two EPDM sponge rolls swiftly, to absorb and remove redundant coating liquid stayed in crossings in the mesh of the electrically conductive substrate. Then the electrically conductive substrate was dried at 50 °C for 10 minutes to have a coating film of the coating liquid formed thereon, and heated and sintered at 500 °C for 10 minutes in a muffle furnace to thermally decompose the coating film. The cycle of roll application, drying, and thermal decomposition was repeated twice to form a first layer.
Next, chloroiridic acid solution (available from Tanaka Kikinzoku Kogyo K.K., iridium concentration: 100 g/L) and dinitrodiammine platinum nitric acid solution (available from Tanaka Kikinzoku Kogyo K.K., platinum concentration: 100 g/L) was mixed at a molar ratio of iridium to platinum of 0.73:0.27 to prepare a second coating liquid. The second coating liquid was applied on the substrate having the first layer formed thereon using the same roll method as in forming the first layer, dried and thermally decomposed. This was repeated twice at drying temperature of 50 °C and a thermal decomposition temperature of 500 °C to form a second layer. A post-heating was carried out in an air atmosphere at 500 °C for 1 hour to fabricate a test cathode.

-Partition wall and outer frame-

An element including a partition wall partitioning an anode and a cathode and including an outer frame bordering the partition wall was used as a bipolar element. Those members in contact with an electrolyte, such as the partition wall and the frame of the bipolar element, were all made of nickel.

-Conductive elastic body-

A body obtained by weaving nickel wires having a diameter of 0.15 mm and then performing corrugation to obtain a corrugation height of 5 mm was used as a conductive elastic body. The conductive elastic body had a thickness of 5 mm and a mesh opening of about 5 mesh.

-Membrane-

A zirconium oxide (product name: EP Zirconium Oxide; available from Daiichi Kigenso Kagaku Kogyo Co., Ltd.) and N-methyl-2-pyrrolidone (available from Wako Pure Chemical Industries, Ltd.) were loaded into a ball mill pot with a capacity of 1000 mL containing SUS balls having a diameter of 0.5 mm. These materials were stirred together at a rotation speed of 70 rpm for 3 hours and dispersed to obtain a mixture. The resulting mixture was filtered through a stainless-steel mesh (mesh count: 30 mesh) to separate the balls from the mixture. Polysulfone (Udel® (Udel is a registered trademark in Japan, other countries, or both) available from Solvay Advanced Polymers) and polyvinylpyrrolidone (available from Wako Pure Chemical Industries, Ltd.; weight-average molecular weight (Mw): 900,000) were added to the mixture from which the balls had been separated, and were stirred therewith for 12 hours using a three-one motor and dissolved to obtain a coating liquid having the following composition.

Polysulfone: 15 parts by mass
Polyvinylpyrrolidone: 6 parts by mass
N-Methyl-2-pyrrolidone: 70 parts by mass
Zirconium oxide: 45 parts by mass

The coating liquid was applied to both sides of a polyphenylene sulfide mesh (available from Clever Co., Ltd.; thickness: 280 $\mu$m; mesh opening: 358 $\mu$m; fiber diameter: 150 $\mu$m) serving as a substrate using a comma coater to obtain a coating thickness of 150 $\mu$m at each side. Immediately after the coating, the substrate coated with the coating liquid was exposed to vapor from a coagulation bath holding a pure water/isopropanol mixture (available from Wako Pure Chemical Industries, Ltd.; pure water/isopropanol = 50/50 (v/v)) at 30 °C. Immediately thereafter, the substrate coated with the coating liquid was immersed in the coagulation bath. A coating film was formed on the surface of the substrate through coagulation of polysulfone. Thereafter, the coating film was thoroughly rinsed with pure water to obtain a porous membrane.

The average pore diameter of this porous membrane was 0.3 $\mu$m in terms of average water permeation pore diameter at 90 °C. The thickness was 580 $\mu$m. The average pore diameter of the porous membrane surface was 2.3 $\mu$m.

-Gasket-

A gasket that was used had a quadrangular shape with a thickness of 4.0 mm, a width of 18 mm, and an inner size of 504 mm square, had an opening having the same size as an electrode compartment in a plan view at the inside thereof, and had a slit structure for holding the membrane through insertion of the membrane. In the slit structure, a gap of 0.4 mm was provided at the center portion in the thickness direction of the inner wall of the opening to hold the partition wall by inserting the partition wall therein. This gasket was made of EPDM rubber and had a tensile stress at 100% deformation of 4.0 MPa.

-Zero-gap bipolar element-

A zero-gap cell unit 60 of external header type had a rectangular shape of 540 mm $\times$ 620 mm, and the area of the current-carrying surface of an anode 2a and a cathode 2c was 500 mm $\times$ 500 mm. On the cathode side of the zero-gap bipolar element 60, a cathode 2c, a conductive elastic body 2e, and a cathode current collector 2r were stacked on one another and connected to a partition wall 1 via a cathode rib 6, and a cathode compartment 5c in which an electrolyte flows was present. On the anode side of the zero-gap bipolar element 60, an anode 2a was connected to the partition wall 1 via an anode rib 6, and an anode compartment 5a in which an electrolyte flows was present (FIG. 2).

The depth of the anode compartment 5a (anode compartment depth; distance between the partition wall and the anode in FIG. 2) was 25 mm, the depth of the cathode compartment 5c (cathode compartment depth; distance between the partition wall and the cathode current collector in FIG. 2) was 25 mm, and the material was nickel. The nickel partition wall 1 to which the anode rib 6 made of nickel having a height of 25 mm and a thickness of 1.5 mm and the cathode rib 6 made of nickel having a height of 25 mm and a thickness of 1.5 mm were attached by welding had a thickness of 2 mm.

A nickel expanded metal substrate that had been subjected to blasting in advance was used as a current collector for the cathode current collector 2r. The substrate had a thickness of 1 mm and an open fraction of 54%. The conductive elastic body 2e was fixed by spot welding on the cathode current collector 2r. By stacking such zero-gap bipolar elements on one another via a gasket holding a membrane, it is possible to form a zero-gap structure Z in which the anode 2a and the cathode 2c are pressed against the membrane 4.

The electrolyte flowed to the cathode compartment 5c through a cathode inlet header, and from the cathode compartment 5c through a cathode outlet header. Further, the electrolyte was flowed to the anode compartment 5a through an anode inlet header, and from the anode compartment 5a through an anode outlet header.

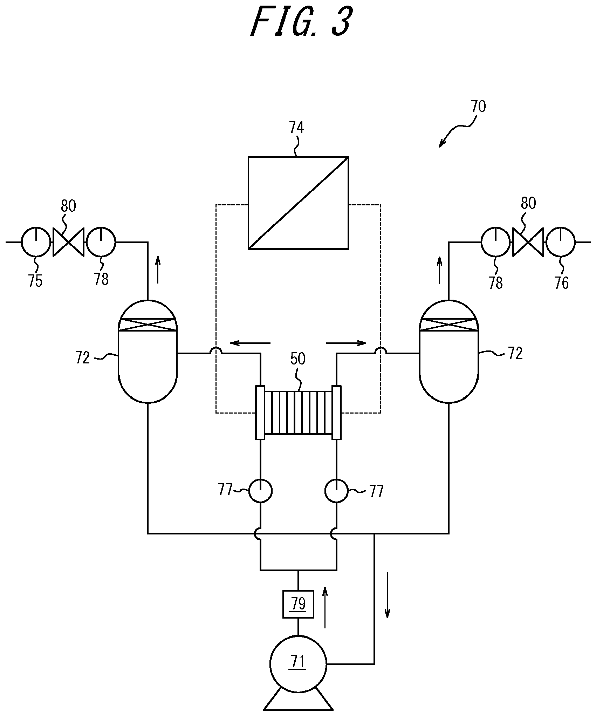

As illustrated in FIG. 3, a cathode electrolyte inlet was connected to one end side on the lower side of the outer frame having a rectangular shape in a plan view, and a cathode electrolyte outlet was connected to the top of the side which is continuous with the other end side on the lower side of the outer frame 3 having a rectangular shape in a plan view. The cathode electrolyte inlet and the cathode electrolyte outlet were arranged in the electrode compartment 5 having a rectangular shape in a plan view so that the cathode electrolyte inlet and the cathode electrolyte outlet are opposed to each other across the center of the electrode compartment 5. The electrolyte flowed from bottom to top at an angle relative to the vertical direction and ascended along the electrode surface (FIG. 3).

In the bipolar electrolyzer 50 according to this example, the electrolyte flowed into the anode compartment 5a and the cathode compartment 5c from the electrolyte inlets of the anode compartment 5a and the cathode compartment 5c, and the electrolyte and produced gas flowed from the electrolyte outlets of the anode compartment 5a and the cathode compartment 5c out of the electrolyzer 50.

In the cathode compartment 5c, hydrogen gas was generated through electrolysis, and in the anode compartment 5a, oxygen gas was generated through electrolysis. Thus, in the cathode outlet header, a mixed phase flow of the electrolyte and the hydrogen gas occurred, and in the anode outlet header, a mixed phase flow of the electrolyte and the oxygen gas occurred.

A bipolar electrolyzer of Example 9 was produced in accordance with the following procedures.

The cathode was attached to a cathode terminal frame to obtain a cathode terminal element. The anode was attached to an anode terminal frame to obtain an anode terminal element.

Nine bipolar elements were prepared. Further, one cathode terminal element and one anode terminal element were prepared.

Gaskets were adhered to metal frame sections of all the bipolar elements, the anode terminal element, and the cathode terminal element.

One membrane was interposed between the anode terminal element and the cathode side of the bipolar element. Nine bipolar elements were arranged in series so that the anode side of one bipolar element and the cathode side of the other bipolar element in adjacent bipolar elements faced to each other, and respective eight membranes were interposed between adjacent bipolar elements to obtain a zero-gap structure in which an cathode and an anode were pressed against a membrane. A membrane A was further interposed between the anode side of the ninth bipolar element and the cathode terminal element. The resultant structure was clamped along with a fast head, an insulation plate, and a loose head using a press machine to provide a bipolar electrolyzer.

The alkaline water electrolysis device as illustrated in FIG. 3 was produced by using a feed pump, a gas-liquid separation tank or the like, all of which have been commonly used in the art.

(Comparative Example 4)

A zero-gap bipolar element was produced in the same way as in Example 9 with the exception that an anode produced in the same way as in Comparative Example 1 was used.

(Comparative Example 5)

A zero-gap bipolar element was produced in the same way as in Example 9 with the exception that an anode produced in the same way as in Comparative Example 3 was used.

Using the above electrolysis device, positive energization was continuously applied for 11 hours to obtain a current density of 6 kA/m$^2$ to perform water electrolysis, and them electrolysis was stopped. After holding for 1 hour in this state, positive energization was applied again for 11 hours at 6 kA/m$^2$. Energization was performed for 1,000 cycles with a cycle of positive energization and stoppage being one cycle. Pair voltages were monitored for each cell of Example 9 and Comparative Examples 4 and 5, and pairs voltage transitions were recorded. The initial pair voltages and the pair voltages after 1,000 cycles of three cells in each of Example 9 and Comparative Examples 4 and 5 were averaged. The results are listed in Table 2.

In Example 9, the averaged initial overvoltage of the three cells was 1.78 V, and the averaged overvoltage after 1,000 cycles was as low as 1.79. On the other hand, Comparative Example 4 had a high initial overvoltage, and sufficiently low electrolysis efficiency was not obtained. Further, in Comparative Example 5, the cell voltage was increased after the cycle test, and enough durability was not obtained. Accordingly, it can be concluded that the anodes in Example 9 had a low overvoltage and high durability, thereby maintaining low cell voltages even after the long-term operation.

Further, after the cycle test, the surface on the anode side of the membrane taken out from the electrolyzer was subjected to elementary analysis using a portable component analyzer Niton XL3t available from Thermo Fisher Scientific. The average of Co atom% values measured at three points per membrane was defined as the Co atom concentration. An average of Ni atom% values was determined in the similar way, which was defined as the Ni atom concentration.

As a result, it was found that in Example 9, the total of the nickel atom concentration and the cobalt atom concentration was 0.23 atom% (Co 0.22 atom%, Ni 0.01 atom%), and on the other hand, in Example 5, the total of the nickel atom concentration and the cobalt atom concentration was 1.58 atom% (Co 1.50 atom%, Ni 0.08 atom%). In Example 9, it is conceivable that a suitable amount of cobalt compounds adhere to a surface of the porous membrane to thereby increase the hydrophilicity of the porous membrane, and suppress the stagnation of bubbles generated by electrolysis on the membrane surface, resulting in the good cell voltage. On the other hand, in Comparative Example 5, it is conceivable that a large amount of cobalt compounds adhere to the membrane surface to thereby cause blocking of a part of pores of the membrane and thus decrease passages for an electrolyte, resulting in the raise in the cell voltage as compared with the initial voltage. As a result of performing SEM-EDX analysis on the cross section of the membrane in Example 9, it was confirmed that Co atoms locally existed in surfaces of zirconium oxide particles.

Table 2

|  |  | Example 9 | Comparative Example 4 | Comparative Example 5 |
|---|---|---|---|---|
| Anode |  | Example 3 | Comparative Example 1 | Comparative Example 3 |
| Pair voltage (initial) | V | 1.78 | 1.8 | 1.79 |
| Pair voltage (after 1000-hours operation) | V | 1.79 | 1.85 | 1.84 |

INDUSTRIAL APPLICABILITY

The anode of the present embodiment has a low oxygen generation potential and high energy conversion efficiency in water electrolysis. Therefore, the anode can be used as an anode for water electrolysis. In particular, the anode is suitably used as an anode for water electrolysis using a variable power source such as electricity generation using unstably supplied natural energy such as solar and wind power.

REFERENCE SIGNS LIST

1 partition wall
2 electrode
2a anode
2c cathode
2e conductive elastic body
2r current collector
3 outer frame
4 membrane
5 electrode compartment
5a anode compartment
5c cathode compartment
5i electrolyte inlet
5o electrolyte outlet
5ai anode electrolyte inlet
5ao anode electrolyte outlet
5ci cathode electrolyte inlet
5co cathode electrolyte outlet
6 rib
7 gasket
10 header
10ai anode inlet header
10ao anode outlet header
10ci cathode inlet header
lOco cathode outlet header
50 bipolar electrolyzer
51g fast head, loose head
51i insulating plate
51a anode terminal element
51c cathode terminal element
51r tie rod
60 bipolar element
65 electrolytic cell
70 electrolysis device
71 tubing pump
72 gas-liquid separation tank

74 rectifier
75 oxygen concentration meter
76 hydrogen concentration meter
77 flow meter
78 pressure gauge
79 heat exchanger
80 pressure control valve
D1 predetermined direction along a partition wall (electrolyte passing direction)
Z zero-gap structure

**Claims**

1. An anode comprising: a nickel porous substrate; and a nickel catalyst layer formed on a surface of the nickel porous substrate, the nickel catalyst layer comprising cobalt at 0.1 mol% or more and 10 mol% or less relative to a total mol number of nickel and cobalt and having a thickness of 50 $\mu$m or more and 800 $\mu$m or less, wherein
the anode has a value of $[I_{NiO}/(I_{Ni} + I_{NiO})] \times 100$ of 0 or more and 15 or less where $I_{Ni}$ represents a peak intensity of X rays diffracted at a (111) plane of nickel, and $I_{NiO}$ represents a peak intensity of X rays diffracted at a (012) plane of a nickel oxide, in the nickel catalyst layer, and
the nickel catalyst layer has a specific surface area of 1.0 m$^2$/g or more and 10.0 m$^2$/g or less.

2. An anode for alkaline water electrolysis comprising: a nickel porous substrate; and a nickel catalyst layer formed on a surface of the nickel porous substrate, the nickel catalyst layer comprising cobalt at 0.1 mol% or more and 10 mol% or less relative to a total mol number of nickel and cobalt and having a thickness of 50 $\mu$m or more and 800 $\mu$m or less, wherein
the anode has a value of $[I_{NiO}/(I_{Ni} + I_{NiO})] \times 100$ of 0 or more and 15 or less where $I_{Ni}$ represents a peak intensity of X rays diffracted at a surface (111) of nickel, and $I_{NiO}$ represents a peak intensity of X rays diffracted at a surface (012) of a nickel oxide, in the nickel catalyst layer, and
the nickel catalyst layer has a specific surface area of 1.0 m$^2$/g or more and 10.0 m$^2$/g or less.

3. The anode according to claim 1 or 2, wherein
the nickel catalyst layer has pores formed therein,
the pores include first pores having a pore diameter of 2 nm or more and 5 nm or less and second pores having a pore diameter of 0.01 $\mu$m or more and 2.00 $\mu$m or less,
the first pores have a specific surface area of 0.6 m$^2$/g or more and 2.0 m$^2$/g or less, and a pore volume of $3 \times 10^{-4}$ ml/g or more and $9 \times 10^{-4}$ ml/g or less, and
the second pores have a specific surface area of 2.0 m$^2$/g or more and 5.0 m$^2$/g or less, and a pore volume of 0.04 ml/g or more and 0.2 ml/g or less.

4. The anode according to any one of claims 1 to 3 comprising cobalt at 0.5 mol% or more and 2 mol% or less relative to a total mol number of nickel and cobalt in the nickel catalyst layer.

5. The anode according to any one of claims 1 to 4 having an electric double layer capacitance of 0.3 F/cm$^2$ or more and 10.0 F/cm$^2$ or less.

6. The anode according to any one of claims 1 to 5, wherein the nickel porous substrate has an open fraction of 20 % or more and 80 % or less.

7. The anode according to any one of claims 1 to 6, wherein the nickel porous substrate has a thickness of 0.2 mm or more and 2.0 mm or less.

8. The anode according to any one of claims 1 to 7, wherein the nickel porous substrate is an expanded metal.

9. The anode according to claim 8, wherein the expanded metal has a size of SW of 2 mm or more and 5 mm or less and LW of 3 mm or more and 10 mm or less.

10. A bipolar electrolytic cell comprising the anode according to any one of claims 1 to 9.

11. The bipolar electrolytic cell according to claim 10, comprising the anode and a cathode stacked each other with a membrane interposed therebetween, wherein the membrane is a porous membrane having an average pore diameter of 0.5 $\mu$m or more and 5 $\mu$m or less on a surface of the porous membrane.

12. The bipolar electrolytic cell according to claim 11, wherein the membrane is a porous membrane embedded with hydrophilic inorganic particles.

13. The bipolar electrolytic cell according to claim 12, wherein the hydrophilic inorganic particles are made of a zirconium oxide.

14. The bipolar electrolytic cell according to claim 12, wherein the hydrophilic inorganic particles comprise a compound including a zirconium oxide, and nickel atoms and/or cobalt atoms.

15. The bipolar electrolytic cell according to any one of claims 12 to 14, wherein a total of a nickel atom concentration and a cobalt atom concentration is 0.01 atom% or more and 1.0 atom% or less when at least one surface of the membrane is analyzed using a X-ray fluorescence method.

16. A hydrogen production method for producing hydrogen by electrolyzing water containing alkali with an electrolyzer, wherein

the electrolyzer comprises at least an anode and a cathode,
the anode comprises a nickel porous substrate and a nickel catalyst layer formed on a surface of the nickel porous substrate, the nickel catalyst layer comprising cobalt at 0.1 mol% or more and 10 mol% or less relative to a total mol number of nickel and cobalt and having a thickness of 50 $\mu$m or more and 800 $\mu$m or less,
the anode has a value of $[I_{NiO}/(I_{Ni} + I_{NiO})] \times 100$ of 0 or more and 15 or less where $I_{Ni}$ represents a peak intensity of X rays diffracted at a (111) plane of nickel, and $I_{NiO}$ represents a peak intensity of X rays diffracted at a (012) plane of a nickel oxide, in the nickel catalyst layer, and
the nickel catalyst layer has a specific surface area of 1.0 m$^2$/g or more and 10.0 m$^2$/g or less.

# FIG. 1

# FIG. 2

# FIG. 3

## INTERNATIONAL SEARCH REPORT

| International application No. |
| --- |
| PCT/JP2018/013768 |

**A. CLASSIFICATION OF SUBJECT MATTER**
Int. Cl. C25B11/06(2006.01)i, C25B1/10(2006.01)i, C25B11/03(2006.01)i,
C25B13/08(2006.01)i

According to International Patent Classification (IPC) or to both national classification and IPC

**B. FIELDS SEARCHED**

Minimum documentation searched (classification system followed by classification symbols)
Int. Cl. C25B1/00-C25B15/08

Documentation searched other than minimum documentation to the extent that such documents are included in the fields searched
Published examined utility model applications of Japan      1922-1996
Published unexamined utility model applications of Japan    1971-2018
Registered utility model specifications of Japan            1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2013/191140 A1 (ASAHI KASEI CORP.) 27 December 2013, fig. 1-25, paragraphs [0020]-[0243] & US 2015/0203976 A1, fig. 1-25, paragraphs [0290], [0291] & EP 2862960 A1 & AU 2013278446 A & CN 104364425 A & TW 201406995 A | 1-16 |
| Y | JP 58-136789 A (INST FRANCAIS DU PETROLE) 13 August 1983, page 1, lower left column, line 7 to page 10, lower right column, line 4 & FR 2518583 A & BE 895366 A & CH 658258 A & CA 1187043 A & IT 1155395 A | 1-16 |
| Y | JP 2010-209420 A (DAISO CO., LTD.) 24 September 2010, paragraph [0023] (Family: none) | 9-15 |

☒ Further documents are listed in the continuation of Box C.          ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 04.06.2018 | 12.06.2018 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/013768

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2016/148302 A1 (ASAHI KASEI CORP.) 22 September 2016, fig. 1, paragraphs [0014]-[0175] & EP 3272908 A1, fig. 1, paragraphs [0014]-[0206] & AU 2016234205 A & CN 107250437 A | 11-15 |
| A | JP 2010-065283 A (DAINIPPON PRINTING CO., LTD.) 25 March 2010, fig. 1-8, paragraphs [0010]-[0128] (Family: none) | 1-16 |

Form PCT/ISA/210 (continuation of second sheet) (January 2015)

32

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5782483 A

- WO 2013191140 A1